# EUROPEAN PATENT SPECIFICATION

(11) **EP 3 617 249 B1**
(45) Date of publication and mention of the grant of the patent: **21.10.2026**
(21) Application number: 19194210.1
(22) Date of filing: 28.08.2019
(51) Int. Cl.: C08G 65/336, C09J 171/02, C09J 201/10, C08L 101/10

(54) **ADHESIVE AND/OR SEALANT COMPOSITION**
KLEBSTOFF- UND/ODER DICHTSTOFFZUSAMMENSETZUNG
ADHÉSIF ET/OU COMPOSITION D'ÉTANCHÉITÉ

(30) Priority: 28.08.2018 EP 18191211
(43) Date of publication of application: 04.03.2020
(73) Proprietor: Soudal, 2300 Turnhout (BE)
(72) Inventor: GEBOES, Peter, 2630 Aartselaar (BE); BARTOLOMEEUSEN, Evelyne, 2328 Meerle (BE); VAN PELT, Geert-Jan, 2460 Lichtaart (BE); VAN DEN PLAS, Dave, 2920 Kalmthout (BE); VERSTEGEN, Joachim, 5508 TN Veldhoven (NL)
(74) Representative: Gevers Patents

(56) References cited:
- EP-A1- 3 255 113
- EP-A2- 0 819 749
- EP-A2- 1 605 008
- WO-A2-2014/033273

## Description

### FIELD OF INVENTION

The present invention relates to an adhesive and/or sealant composition obtainable by a method used for manufacturing said composition according to the present invention and the use thereof in the bonding, sealing or coating of materials.

### BACKGROUND OF THE INVENTION

Adhesive and/or sealant compositions have numerous applications, for example in the bonding, sealing or coating of materials.

Many adhesive and/or sealant compositions comprise reactive silane-modified polymer systems wherein the silane-groups comprise hydrolysable groups. These silane-modified polymers are capable, even at room temperature, of condensing with one another by elimination of the hydrolysable groups. Depending on the amount of hydrolysable groups and their construction, the products are principally long-chain polymers (thermoplastics), relatively wide-meshed three-dimensional networks (elastomers) or else highly crosslinked systems (thermosets). Such adhesive and/or sealant compositions comprising reactive silane-modified polymer systems are notably described in US 2015/0203624 A1, EP 0240044 A2, WO 2004/090060 A2, EP 1043356 A1, EP 2581406 A1 and WO 2006/078756 A1, US8101704 B2, US7294669 B2, EP2625226 B1, US8859674 B2, WO2014009557 A1, WO2009130298 A1.

Adhesive and/or sealant compositions often require a certain initial tack, especially in applications where high stresses are applied to the adhesive and/or sealant composition before being cured. As used herein, the term "initial tack" refers to the tack value measured directly after application of the adhesive and/or sealant composition prior to cross-linking and/or curing of the composition.

The initial tack in an uncured composition is not to be confused with the 'initial adhesiveness' as obtained in classical two-component compositions where the second component is used to accelerate curing after application and wherein there is still a time period (typically minutes to hours) wherein the obtained mixture may have very low initial tack properties.

It is known in the art that adhesive and/or sealant compositions exhibiting a higher initial tack may be obtained by including high amounts of rheology modifiers. Typically, the rheology modifier is incorporated in the composition during mixing and is activated by applying a high temperature by heating and/or applying high shear, so as to obtain an adhesive and/or sealant composition having a high initial tack. However, one of the drawbacks of these adhesive and/or sealant compositions having a higher initial tack lies in the fact that the production of said compositions is very problematic. Due to the high tack and the high viscosity of said compositions, often specialized and expensive equipment is required for homogeneous mixing of all components. Furthermore, mixing and pumping of the adhesive composition to downstream processes can be very troublesome, which is not advantageous.

US 2012/0298300 A1 relates to moisture-curing compositions based on silane-functional polymers, which are suitable as adhesives, sealants or coatings, and which can present improved initial strengths. However, US 2012/0298300 A1 is not concerned with a method for the manufacturing of an adhesive and/or sealant composition having a high initial tack. Furthermore, the adhesives as described in US 2012/0298300 A1 are warm- or hot-melt adhesives which have to be heated and melted at a high temperature in their use, and thus require a heat coating apparatus. Moreover, the type of objects to be bonded by this adhesive is usually rather limited. There are no initial tack values disclosed.

WO 2014/033273 A2 relates to a one- and two-component adhesive composition having a high initial tack, comprising a moisture cross-linking silyl modified polymer and an organoclay-based rheology controller being an alkyl ammonium salt modified mineral clay mixture and a method of production of said adhesive composition. WO 2014/033273 A2 provides relatively low viscous 1K adhesive compositions of which the viscosity increases to the desired value for early strength, or tack, upon application. When said applied adhesive compositions are then exposed to water, the organoclay-based rheology controller is activated and the tack value increases. WO 2014/033273 A2 further describes two-component adhesives which have a low viscosity upon application, where the thickening effect takes place upon combining of the two components. However, as said, the tack value is only increased upon application of the adhesive composition and there is still a time period wherein the adhesive may have very low initial tack properties.

EP 1605008 A2 and EP 0819749 A2 relate to an adhesive or sealant composition with high initial tack, comprising a cross-linkable polymer and a rheology controller. EP 1605008 A2 and EP 0819749 A2 further relate to a process for the production of said adhesive or sealant composition. Said rheology controller should give sufficient thickening of the uncross-linked adhesive composition and is used in an amount preferably between 1 and 5% by weight. The mentioned preferred order of addition is to initially combine the cross-linkable polymer with the rheology controller under low speed mixing followed by a high speed mixing under vacuum to increase the temperature to at least 40 °C. The composition so formed is filled into a water-impermeable container and the filled container may then be heated to the required activation temperature. In the experimental section of EP 1605008 A2, the amount of rheology controller used is between 3 and 4 % by weight and the final temperature during mixing is as high as 85 - 95°C, which is well above the disclosed suitable activation temperature for polyamide waxes of at least 50 °C. Similarly, EP 0819749 A2 discloses that the mixing and heat-processing step may be conducted in such a way that in the last stage of mixing, the temperature reaches 80 - 85 °C, which is well above the disclosed suitable activation temperature for polyamide waxes of at least 60 °C. By mixing at such high temperatures, a heat activatable rheology controller in the adhesive composition, such as a polyamide wax, will be activated. Therefore, the tack value of the adhesive composition will increase before it is filled in a container, which will make handling of the adhesive composition significantly more difficult. EP 1605008 A2 and EP 0819749 A2 further mention that the preferred minimum storage modulus is 200 kN/m².In addition, EP 1605008 A2 mentions that the preferred initial viscosity (measured by an oscillation measurement with a rheometer after 3 minutes, at 1 Hz, at 23 °C) is between 50000 and 90000 Pa.s. There are no initial tack values disclosed in both EP 1605008 A2 and EP 0819749 A2.

Accordingly, there is a further need to provide a versatile, less time consuming, more economical and more practical method for the manufacturing of an adhesive and/or sealant composition which allows to obtain high initial tack values, without the need of using high amounts of rheology modifier and without the need of using specialized equipment for mixing and pumping.

### SUMMARY OF THE INVENTION

The Applicant has now found a composition [composition (C), herein after] suitable for use as a sealant and/or adhesive prepared according to a method for manufacturing said composition (C) which comprises the steps of:
step 1: providing a container comprising a mixture (M) [filled container (F), herein after], wherein the mixture (M) is prepared by mixing at least one silane-modified polymer [silane-modified polymer (P), herein after] with at least one heat activatable rheology modifier having an activation temperature [rheology modifier (R), herein after], wherein the mixing is carried out at a mixing temperature below the activation temperature of the rheology modifier (R);
step 2: heating the filled container (F) to above the activation temperature of the rheology modifier (R), thereby transforming the mixture (M) into a composition (C) inside the filled container (F);
   wherein prior to heating in step 2, the filled container (F) is preheated above the activation temperature T of the rheology modifier (R) by means of microwave heating, ohmic heating, radio frequency heating or infrared heating, preferably microwave heating or radio frequency heating, more preferably microwave heating;
   wherein the mixture (M) as used in step 1 is characterized by a tack value T₀, the composition (C) as obtained in step 2 is characterized by a tack value T, and the ratio of the tack value T of composition (C) to the tack value T₀ of the mixture (M), is equal to or more than 3, the tack values T and T₀ were determined by an oscillatory rheological measurement wherein a sinusoidal stress deformation is applied and the resultant strain response is measured at a temperature of 20 °C, with a soak time of 10 seconds, a frequency ω of 1Hz, a top rotatable stainless steel plate diameter d of 25 mm and a shear stress sweep from 10 Pa to 20000 Pa; the tack values T and T₀ are measured on a stress scale when the phase angle δ reached 45°;wherein the mixture (M) as used in step 1 is further characterized by a viscosity V₀, the composition (C) as obtained in step 2 is further characterized by a viscosity V and the ratio of the viscosity V of composition (C) to the viscosity V₀ of the mixture (M) is equal to or more than 3, the viscosity V and V₀ were determined by an oscillatory rheological measurement wherein a sinusoidal stress deformation is applied and the resultant strain response is measured at a temperature of 20 °C, with a soak time of 10 seconds, a frequency ω of 1Hz, a top rotatable stainless steel plate diameter d of 25 mm and a shear stress sweep from 10 Pa to 20000 Pa; a rheological profile is determined and the viscosity V and V₀ are determined by calculating the average of at least 3 of the first measuring points of the plateau phase of the rheological profile; wherein the mixture (M) as used in step 1 is further characterized by an extrudability E₀, the composition (C) as obtained in step 2 is further characterized by an extrudability E and the ratio of the extrudability E₀ of the mixture (M) to the extrudability E of the composition (C) is more than 2, a nozzle with a 6 mm opening is applied to the top of the container (F) comprising the mixture (M) or the composition (C); the container (F) is then placed in a pneumatic gun; the pressure of the container (F) is then set to 6 bar and extruded for 10 seconds; the amount of extruded mixture (M) or composition (C) is weighed in grams.

It is also a further object of the present invention to provide uses of said adhesive and/or sealant compositions.

### DETAILED DESCRIPTION OF THE INVENTION

Within the context of the present invention, the expression "at least one silane-modified polymer (P)" is intended to denote one or more than one silane-modified polymer (P). Mixtures of polymers (P) can also be used for the purpose of the invention. The expression "at least one rheology modifier (R)", is intended to denote one or more than one rheology modifier (R). Mixtures of rheology modifiers (R) can also be used for the purpose of the invention.

In the remainder of the text, the expressions "silane-modified polymer (P)" and "rheology modifier (R)" are understood, for the purposes of the present invention, both in the plural and the singular form.

As used herein the term "alkyl" and "alkenyl" have the broadest meaning generally understood in the art, and may include a moiety which is linear, branched, cyclic or a combination thereof having the specified number of carbon atoms, for example, the term "C₁₋₁₀ alkyl" is intended to denote an alkyl group having from 1 to 10 carbon atoms, all of which may be optionally substituted.

The term "aliphatic" or "aliphatic group", as used herein, denotes a hydrocarbon moiety that may be linear, branched, cyclic or a combination thereof which may be completely saturated or may contain one or more units of unsaturation, but which is not aromatic and is having the specified number of carbon atoms, for example, the term "C₁₋₁₀ aliphatic group" is intended to denote an aliphatic group having from 1 to 10 carbon atoms, all of which may be optionally substituted

The term "saturated", as used herein, means that a moiety has no double or triple bonds.

The term "unsaturated", as used herein, means that a moiety has one or more double or triple bonds.

The term "aryl" refers to an aromatic group having the specified number of carbon atoms such as notably phenyl, biphenyl and naphtyl, all of which may be optionally substituted.

### MIXTURE (M)

In step 1 of the method used for manufacturing the composition (C) of the present invention, a filled container (F) is provided comprising a mixture (M), wherein the mixture (M) is prepared by mixing at least one silane-modified polymer (P) with at least one heat activatable rheology modifier having an activation temperature T, wherein the mixing is carried out at a mixing temperature below the activation temperature of the rheology modifier (R).

According to certain embodiments, the at least one silane-modified polymer (P) and the at least one heat activatable rheology modifier (R), are mixed inside a container, thereby simultaneously forming the mixture (M) and a filled container (F).

In a preferred embodiment of the method used for manufacturing the composition (C) according to the present invention, the at least one silane-modified polymer (P) is mixed with the at least one heat activatable rheology modifier (R), thereby forming the mixture (M) separately, and the said mixture (M) is then filled into a container and sealed therein, thereby forming a filled container (F).

The filling of the containers may be performed by a variety of conventional filling techniques and filling systems known to those skilled in the art. In general, the mixture (M) is prepared and then pumped to a filling machine where said mixture (M) is filled into containers, preferably water-impermeable containers.

The intimate admixing of the at least one silane-modified polymer (P) with the at least one heat activatable rheology modifier (R), in step 1 of the method used for manufacturing the composition (C) according to the present invention may be performed by a variety of conventional mixing techniques known to those skilled in the art.

The inventors have found that it is necessary that the mixing of the at least one silane-modified polymer (P), as detailed below, with the at least one heat activatable rheology modifier (R), as detailed below, in step 1 of the method used for manufacturing the composition (C) according to the present invention, is carried out below the activation temperature T of the rheology modifier (R).

It is understood that the activation temperature T of the rheology modifier (R) may be a temperature range which includes a minimum activation temperature and an optimum activation temperature at which the activation is the most efficient. The activation temperature T of the rheology modifier (R) may be determined using the method which is described in detail in the experimental section.

In one embodiment of the method used for manufacturing the composition (C) according to the present invention, the activation temperature T of the rheology modifier (R) is an activation temperature range wherein the rheology modifier (R) is having a minimum activation temperature [minimum activation temperature Tₘᵢₙ, herein after] and an optimum activation temperature [optimum activation temperature Tₒₚₜ, herein after] and the mixing of the at least one silane-modified polymer (P), as detailed below, with the at least one heat activatable rheology modifier (R), as detailed below, in step 1 of the method used for manufacturing the composition (C) according to the present invention, is carried out below the optimum activation temperature Tₒₚₜ of the rheology modifier (R), preferably at least 10 °C below, more preferably at least 15 °C below, even more preferably at least 20 °C below, even more preferably at least 25 °C below, even more preferably at least 30 °C below, even more preferably at least 35 °C below, yet even more preferably at least 40 °C below and most preferably at least 45 °C below the optimum activation temperature Tₒₚₜ of the rheology modifier (R).

In a preferred embodiment of the method used for manufacturing the composition (C) according to the present invention, the mixing of the at least one silane-modified polymer (P), as detailed below, with the at least one heat activatable rheology modifier (R), as detailed below, in step 1 of the method used for manufacturing the composition (C) according to the present invention, is carried out below the minimum activation temperature Tₘᵢₙ of the rheology modifier (R), preferably at least 1 °C below, more preferably at least 2.5 °C below and most preferably at least 3.5 °C below the minimum activation temperature T_{win} of the rheology modifier (R).

The inventors have found that the temperature of mixing strongly influences the properties such as tack value, viscosity and extrudability of both the mixture (M) and the composition (C). The inventors believe that by keeping the temperature below the activation temperature T of the rheology modifier (R), the rheology modifier (R) will not be activated or will only be partially activated. When the rheology modifier (R) would be activated during mixing, a part of its functionality may be broken down again due to the shear forces which occur during mixing. By (partially) postponing the activation of the rheology modifier (R) to step 2 of the method used for manufacturing the composition (C) according to the present invention, when the mixture (M) is already inside the filled container (F), this breakdown is less likely to occur since no more mixing steps are involved. The inventors have found that this improves the handling of the mixture (M) since the properties such as tack value, viscosity and extrudability only change once inside the filled container (F).

In a preferred embodiment of the method used for manufacturing the composition (C) according to the present invention, the mixing of the at least one silane-modified polymer (P), as detailed below, with the at least one heat activatable rheology modifier (R), as detailed below, in step 1 of the method used for manufacturing the composition (C) according to the present invention, is carried out below 50.0 °C, preferably below 45.0 °C, more preferably below 42.5 °C, most preferably below 40.0 °C.

To keep the temperature below the activation temperature T of the rheology modifier (R), a variety of temperature control and/or cooling techniques may be used known to those skilled in the art such as but not limited to air cooling, chillers, intercoolers, heat sinks and/or liquid cooling with coolants such as water or oil. Preferably, water is used as a coolant to keep the temperature of the mixture (M) below the activation temperature T of the rheology modifier (R).

Typically, the mixing of the at least one silane-modified polymer (P) with the at least one heat activatable rheology modifier (R), is carried out by using static mixers, ribbon blenders, V blenders, continuous processors, cone screw blenders, screw blenders, double cone blenders, double planetary mixers, dissolver mixers, high viscosity mixers, counter-rotating mixers, double and triple shaft mixers, vacuum mixers, dispersion mixers, paddle mixers, jet mixers, mobile mixers, drum blenders, intermix mixers, planetary mixers, high intensity mixers or dual asymmetric centrifugal mixers and the like so as to obtain a physical mixture.

Preferably, a low shear mixing technique is used to mix the at least one silane-modified polymer (P) with the at least one heat activatable rheology modifier (R), thereby forming the mixture (M). The inventors have found that a low shear mixing technique generates less heat compared to high shear mixing techniques. One skilled in the art can make appropriate decisions and/or experimentally determine appropriate mixing conditions whereby the mixing is performed at low shear forces.

In a preferred embodiment of the method used for manufacturing the composition (C) of the present invention, the mixture (M) as obtained in step 1, has an tack value T₀, measured in accordance with a rheological method, as detailed below, equal to or less than 2000 Pascal (Pa), preferably equal to or less than 1750 Pa, more preferably equal to or lower than 1500 Pa, even more preferably equal to or lower than 1250 Pa, even more preferably equal to or lower than 1000 Pa, even more preferably equal to or lower than 850 Pa, most preferably equal to or lower than 750 Pa.

It is further understood when the mixture (M) did not exhibit any tack at all or the tack was too low to measure, a tack value T₀ of 0 Pa is assigned.

In order to objectively quantify the tack values, in the context of the present invention, the initial tack T₀ and T may be determined using the rheological method which is described in detail in the experimental section. The tack value T and T₀ can suitably be determined by an oscillatory rheological measurement wherein a sinusoidal stress deformation is applied and the resultant strain response is measured using a HR-2 Discovery Hybrid Rheometer of the TA Instruments company or an equivalent which is known to those skilled in the art.

Without being bound to this theory, the inventors have found that the advantage of using an oscillatory rheological measurement lies in the fact that the sample might not be destroyed during the measurement and thereby valid results may be obtained, in contrast to rotational rheological measurements where the samples often may show a tendency to deformation and/or to tearing. Furthermore, the method provides a better reproducibility and is independent of the operator.

Advantageously, the mixture (M) as obtained in step 1, has a viscosity V₀, equal to or less than 20000 Pascale.second (Pa.s), preferably equal to or less than 18000 Pa.s, more preferably equal to or lower than 16000 Pa.s, even more preferably equal to or lower than 15000 Pa.s, even more preferably equal to or lower than 14000 Pa.s, even more preferably equal to or lower than 13500 Pa.s, most preferably equal to or lower than 13000 Pa.s.

The viscosity V₀ of the mixture (M) is the complex viscosity of the mixture (M) and may be determined using the rheological method which is described in detail in the experimental section.

Advantageously, the mixture (M) as obtained in step 1, has an extrudability E₀ at 6 bar of equal to or more than 1000 grams/minute (g/min.), preferably equal to or more than 1200 g/min., more preferably equal to or more than 1400 g/min., even more preferably equal to or more than 1600 g/min., even more preferably equal to or more than 1800 g/min., even more preferably equal to or more than 2000 g/min., most preferably equal to or more than 2100 g/min.

The extrudability E₀ of the mixture (M) at a pressure of 6 bar provides an idea of the workability and the viscosity of the mixture (M) and may be determined using the method which is described in detail in the experimental section.

Thus, in step 1 of the method used for manufacturing the composition (C) of the present invention at least one heat activatable rheology modifier (R) having an activation temperature T is used in preparing the mixture (M), as detailed above.

As said, the inventors have found that it is necessary to carry out the mixing at a mixing temperature below the activation temperature T of the rheology modifier (R). By keeping the mixing temperature below the activation temperature T of the rheology modifier (R), the rheology modifier (R) is not (or only partially) activated.

It is understood that the activation temperature T of the rheology modifier (R) depends on the type of rheology modifier (R) that is used and may further be dependent on the type of the silane-modified polymer (P) and the composition (C) (i.e. the matrix) in which the rheology modifier (R) is used, but the activation temperature T of the rheology modifier (R) as used in step 1, is advantageously at least 50 °C, preferably at least 55 °C, most preferably at least 60 °C and preferably at most 110 °C, more preferably at most 100°C, even more preferably at most 95 °C, most preferably at most 90 °C.

Good results were obtained when the activation temperature T of the rheology modifier (R) is between 75 - 95°C.

As said, the activation temperature T of the rheology modifier (R) may be a temperature range which includes a minimum activation temperature and an optimum activation temperature at which the activation is the most efficient. Preferably, the optimum activation temperature Tₒₚₜ, of the rheology modifier (R) as used in step 1, is advantageously at least 50 °C, preferably at least 55 °C, most preferably at least 60 °C and preferably at most 110 °C, more preferably at most 100°C, even more preferably at most 95 °C, most preferably at most 90 °C.

Good results were obtained when the optimum activation temperature Tₒₚₜ of the rheology modifier (R) is between 75 - 95°C.

It is further understood that the activation temperature T of the rheology modifier (R), in particular for amide based compounds such as polyamide wax, may further be dependent on the polarity of the silane-modified polymer (P) and the composition (C), and in general, the higher the polarity, the lower the activation temperature T.

Within the context of the present invention, the heat activatable rheology modifiers (R) suitable for use should be capable of providing, after activation by heating, a sufficient initial tack for satisfactory application to inclined or vertical surfaces. The activation of the rheology modifiers (R) by heating occurs in step 2 of the method used for manufacturing the composition (C) according to the present invention during the transformation of the mixture (M) to the composition (C). The initial tack value T₀ or T is measured prior to cross-linking and/or curing of the mixture (M) or the composition (C), respectively (i.e. directly after application).

Rheology modifiers (R) suitable for use in step 1 of the method used for manufacturing the composition (C) according to the present invention are heat-activatable rheology modifiers (R) such as but not limited to castor-oil based compounds, amide based compounds, organo-clay based compounds, fatty acid based compounds or mixtures of two or more thereof. More preferably, the at least one rheology modifier (R) as used in step 1 of the method used for manufacturing the composition (C) according to the present invention is an amide based compound such as a polyamide wax.

Non-limiting examples of castor-oil based compounds suitable for use as rheology modifiers (R) in step 1 of the method used for manufacturing the composition (C) according to the present invention include: Thixcin^{®} R and Thixatrol^{®} AS 8053 available from Elementis Specialties, Efka^{®} RM 1900 and Efka^{®} RM 1920 available from BASF, Iscathix^{®} T, Iscathix ^{®} SR and Iscathix ^{®} ISP available from ISCA UK, Advitrol 100, Rheocin, Rheocin T and Rheotix 240 available from BYK-Chemie, Crayvallac^{®} MT and Crayvallac^{®} PC available from Arkema, CLiQFLOW^{®} 707 and CLiQFLOW^{®} 709 available from CLiQ SwissTech, Luvotix^{®} HT, Luvotix^{®} R and Luvotix^{®} ZH 50 available from Lehmann & Voss.

Non-limiting examples of organo-clay based compounds suitable for use as rheology modifiers (R) in step 1 of the method used for manufacturing the composition (C) according to the present invention include: Advitrol 8-10 available from BYK-Chemie.

Non-limiting examples of amide based compounds suitable for use as rheology modifiers (R) in step 1 of the method used for manufacturing the composition (C) according to the present invention include: Disparlon^{®} 6650 available from Kusumoto Chemicals, Thixatrol^{®} P200A, Thixatrol^{®} MAX, Thixatrol^{®} Plus and Thixatrol^{®} PM 8056 available from Elementis Specialties, Crayvallac^{®} SLX, Crayvallac^{®} SUPER, Crayvallac^{®} ULTRA available from Arkema, Luvotix^{®} HP, Luvotix^{®} AB and Luvotix^{®} LT10 available from Lehmann & Voss, FRGEL^{®} 6650 available from FCC INC, EurikaThix 5090, EurikaThix 5390, EurikaThix 5790, EurikaThix 5590, EurikaThix 5190N available from Eurikas.

Non-limiting examples of fatty acid based compounds suitable for use as rheology modifiers (R) in step 1 of the method used for manufacturing the composition (C) according to the present invention include: Luvotix^{®} VP 031 available from Lehmann & Voss.

In one embodiment of the method used for manufacturing the composition (C) of the present invention, the weight percent of the rheology modifier (R) as used in step 1, relative to the total weight of the mixture (M) as obtained in step 1, is advantageously equal to or greater than 0.1 wt.%, or equal to or greater than 0.5 wt.%, or equal to or greater than 1.0 wt.%, or equal to or greater than 1.25 wt.%, or equal to or greater than 1.5 wt.%, or equal to or greater than 1.75 wt.%, or equal to or greater than 2.0 wt.%, or equal to or greater than 2.5 wt.%, or equal to or greater than 3.0 wt.%.

It is further understood that, the weight percent of the rheology modifier (R), relative to the total weight of the mixture (M), is advantageously equal to or less than 70.0 wt.%, or equal to or less than 60.0 wt.%, or equal to or less than 50.0 wt.%, or equal to or less than 40.0 wt.%, or equal to or less than 30.0 wt.%, or equal to or less than 20.0 wt.%, or equal to or less than 10.0 wt.%, or equal to or less than 7.5 wt.%, or equal to or less than 7.0 wt.%, or equal to or less than 6.0 wt.%, or equal to or less than 5.0 wt.%, or equal to or less than 4.5 wt.%, or equal to or less than 4.0 wt.%.

The inventors have surprisingly found that lower amounts of rheology modifier (R) could be used while maintaining or improving the same properties such as tack value, viscosity and extrudability of the composition (C) compared to adhesive/sealant compositions which were mixed at temperatures above the activation temperature or within the activation temperature range of the rheology modifier (R). Another significant advantage of the method used for manufacturing the composition (C) of the present invention lies in the fact that it is a versatile method. The method according to the present invention allows to tune the tack value T, the viscosity V and the extrudability E within a very broad range through varying the type and the amount of the rheology modifier (R), as evidenced in the experimental section below.

It is understood that the amount of the rheology modifier (R) depends on the type of adhesive/sealant composition that one wants to obtain. Adhesive/sealant compositions having a high tack T will require a different amount of rheology modifier (R) compared to adhesive/sealant compositions having a normal tack T. In the context of the present invention adhesive/sealant compositions having a normal tack T are adhesive/sealant compositions having a tack T of equal to or less than 1500 Pa and adhesive/sealant compositions having a high tack T are adhesive/sealant compositions having a tack T of more than 1500 Pa, measured in accordance with a rheological method, as detailed below.

According to certain embodiments of the method used for manufacturing the composition (C) of the present invention, the tack value T of the composition (C) as obtained in step 2 is a high tack value T, measured in accordance with the rheological method as detailed below, and the weight percent of the rheology modifier (R) as used in step 1, relative to the total weight of the mixture (M) as obtained in step 1, is advantageously equal to or greater than 0.1 wt.%, preferably equal to or greater than 0.5 wt.%, more preferably equal to or greater than 1.0 wt.%, even more preferably equal to or greater than 1.25 wt.%, yet even more preferably equal to or greater than 1.5 wt.%, yet even more preferably equal to or greater than 1.75 wt.%, most preferably equal to or greater than 2.0 wt.%. It is further understood that, the weight percent of the rheology modifier (R), relative to the total weight of the mixture (M), is advantageously equal to or less than 70.0 wt.%, or equal to or less than 60.0 wt.%, or equal to or less than 50.0 wt.%, or equal to or less than 40.0 wt.%, or equal to or less than 30.0 wt.%, or equal to or less than 20.0 wt.%, or equal to or less than 10.0 wt.%, preferably equal to or less than 7.5 wt.%, more preferably equal to or less than 7.0 wt.%, even more preferably equal to or less than 6.0 wt.%, yet even more preferably equal to or less than 5.0 wt.%, most preferably equal to or less than 4.5 wt.%.

Thus, in step 1 of the method used for manufacturing the composition (C) of the present invention at least one silane-modified polymer (P) is used in preparing the mixture (M), as detailed above.

In a preferred embodiment of the method used for manufacturing the composition (C) according to the present invention, the at least one silane-modified polymer (P) is having at least one silane group of general formula (I) [silane group (SG), herein after]:

-(A)_{b}-(CH₂)ₘ-SiR¹ₐ(Y)₃₋ₐ formula (I)

wherein:
- A is each independently a divalent linker group selected from the group consisting of -O-, -S-, -(R²)N-, -O-CO-N(R²)-, - N(R²)-CO-O-, -N(R²)-CO-NH-, -NH-CO-N(R²)-, and -N(R²)-CO-N(R²)-, wherein R² is hydrogen, C₁₋₁₈ alkyl, C₂₋₁₈ alkenyl or C₁₋₆ aryl group;
- R' is a C₁₋₁₀ alkyl, C₂₋₁₀ alkenyl, C₁₋₁₀ cycloalkyl or C₆₋₁₀ aryl group;
- Y is each independently a hydroxyl or hydrolysable group;
- a is an integer ranging from 0 to 3;
- b is an integer ranging from 0 to 1 ;
- m is an integer ranging from 0 to 6.

Preferably, A in the silane group (SG) of general formula (I) in the silane-modified polymer (P) is a divalent linker group independently selected from the group consisting of -O-,-(R₂)N-, -O-CO-N(R²)-, -N(R₂)-CO-O-, -N(R₂)-CO-NH-, -NH-CO-N(R₂)-, and -N(R²)-CO-N(R²)-, wherein R₂ is hydrogen, C₁₋₁₀alkyl, C₂₋₁₀alkenyl or C₁₋₆aryl group. More preferably, A is a divalent linker group independently selected from the group consisting of - O-, -O-CO-N(R²)-, -N(R₂)-CO-O-, -N(R²)-CO-N(R²)-, wherein R₂ is hydrogen, C₁₋₅ alkyl or C₁₋₆ aryl group. Even more preferably, A is a divalent linker group independently selected from the group consisting of -O-, -O-CO-N(R₂)-, -N(R²)-CO-N(R²)-, wherein R₂ is hydrogen, C₁₋₅ alkyl or C₁₋₆ aryl group.

Preferably, each of R¹ in the silane group (SG) of general formula (I) in the silane-modified polymer (P) is independently selected from a C₁₋₁₀ alkyl, C₂₋₁₀ alkenyl; C₁₋₁₀ cycloalkyl or C₆₋₁₀ aryl group. More preferably, each of R¹ is independently selected from C₁₋₅ alkyl or C₁₋₈ cycloalkyl group. Even more preferably, each of R¹ is independently selected from methyl, ethyl, propyl, butyl, pentyl, isopropyl, isobutyl, tert-butyl. More preferably, R¹ is methyl or ethyl.

Preferably, a in the silane group (SG) of general formula (I) in the silane-modified polymer (P) is an integer ranging from 0 to 1, more preferably a is 1.

Preferably, b in the silane group (SG) of general formula (I) in the silane-modified polymer (P) is equal to 1.

Preferably, m in the silane group (SG) of general formula (I) in the silane-modified polymer (P) is an integer ranging from 0 to 4, more preferably m is an integer ranging from 0 to 3, even more preferably m is 1 or 3, most preferably m is 1.

As said, each of Y in the silane group (SG) of general formula (I) in the silane-modified polymer (P) as used in step 1 of the method used for manufacturing the composition (C) of the present invention, is a hydroxyl or a hydrolysable group.

When Y is a hydrolysable group, Y is selected from the group consisting of halogen atoms, alkoxy groups, acyloxy groups, ketoxymate groups, amino groups, amide groups, acid amide groups, aminooxy groups, mercapto groups, and alkenyloxy groups. Preferably, Y is selected from the group consisting of alkoxy groups, acyloxy groups, ketoxymate groups, amino groups, amide groups, aminooxy groups, mercapto groups, and alkenyloxy groups. More preferably, Y is an alkoxy group such as a methoxy, ethoxy, propoxy, butoxy group and the like. Most preferably, Y is a methoxy or an ethoxy group.

It is understood that each silane group (SG) of general formula (I) can act as a side group and/or an end group which is attached to at least one main chain of the silane-modified polymer (P) [main chain (MC), herein after].

Preferably, the silane group (SG) of general formula (I) is an end-group.

The building blocks of the at least one main chain (MC) of the silane-modified polymer (P) as used in the method used for manufacturing the composition (C) of the present invention, [building blocks (B), herein after] are not particularly limited.

In a preferred embodiment of the method used for manufacturing the composition (C) of the present invention, suitable building blocks (B) of the main chain (MC) of the silane-modified polymer (P), as used in step 1 of the method used for manufacturing the composition (C) of the present invention, may be chosen among one or more than one building blocks (B) selected from the group consisting of polysiloxanes, polysiloxane-urea/urethane copolymers, polyurethanes, polyureas, polyethers, polyesters, polyacrylates and polymethacrylates, polycarbonates, polystyrenes, polyamides, polyvinyl esters or polyolefins such as, for example, polyethylene, poly-butadiene, ethylene-olefin copolymers and styrene-butadiene copolymers, or a mixture of two or more thereof. Preferably, the building blocks (B) may be selected from the group consisting of polysiloxanes, polyurethanes, polyethers, or mixtures thereof. More preferably, the building blocks (B) may be selected from polyurethanes, polyethers, or mixtures thereof. Most preferably, the building blocks (B) are polyethers.

In an alternative embodiment of the method used for manufacturing the composition (C) of the present invention, suitable building blocks (B) of the main chain (MC) of the silane-modified polymer (P), as used in step 1 of the method used for manufacturing the composition (C) of the present invention, may be monomeric units selected from the group consisting of: acrylic monomers, silicone monomers, carboxylic acid monomers, alcohols, isocyanate monomers, epoxide monomers, allyl monomers, amine monomers, anhydride monomers, styrene monomers, vinyl monomers, or mixtures thereof.

Suitable preparation methods of the main chain (MC) of the silane-modified polymer (P) as used in step 1 of the method used for manufacturing the composition (C) of the present invention, are well-known in the art.

It is understood that in the main chain (MC) various structures are possible such as branched or unbranched structures. The average chain lengths of main chains (M) may be adapted arbitrarily in accordance with the particular desired properties.

The preparation of the silane-modified polymer (P) as used in step 1 of the method used for manufacturing the composition (C) of the present invention, is well-known in the art and notably described in US 8697815 B2, EP2625226B1, US 4962152 A, US7294669B2, WO2009130298A1 and US8859674B2.

Typical silane-modified polymers (P) suitable for use in step 1 of the method used for manufacturing the composition (C) of the present invention may include, but are not limited to, silane-modified polysiloxanes, silane-modified polysiloxane-urea/urethane copolymers, silane-modified polyurethanes, silane-modified polyureas, silane-modified polyethers, silane-modified polyesters, silane-modified polyacrylates and silane-modified polymethacrylates, silane-modified polycarbonates, silane-modified polystyrenes, silane-modified polyamides, silane-modified polyvinyl esters or silane-modified polyolefins such as, for example, silane-modified polyethylene, silane-modified poly-butadiene, silane-modified ethylene-olefin copolymers and silane-modified styrene-butadiene copolymers, or a mixture of two or more thereof.

Preferably, the silane-modified polymers (P) as used in step 1 of the method used for manufacturing the composition (C) of the present invention may be chosen among the group of silane-modified polysiloxanes, silane-modified polyesters, silane-modified polyurethanes, silane-modified polyethers, or mixtures thereof. More preferably, the silane-modified polymers (P) may be selected from silane-modified polyurethanes, silane-modified polyethers or mixtures thereof. Most preferably, the silane-modified polymers (P) are silane-modified polyethers.

Said silane-modified polysiloxanes, silane-modified polyurethanes and silane-modified polyethers are known to those skilled in the art.

Non limitative examples of commercially available silane-modified polysiloxanes suitable for use in step 1 of the method used for manufacturing the composition (C) of the present invention include: Polymer OM 53, Polymer OM 23, Polymer OM 5 and Polymer OM 1 from Evonik Industries.

Non limitative examples of commercially available silane-modified polyurethanes, silane-modified polyethers, or mixtures thereof, suitable for use in step 1 of the method used for manufacturing the composition (C) of the present invention include: the hybrid polymers Polymer ST 61, Polymer ST 75, Polymer ST 77, Polymer ST XP AG 48 from Evonik Hanse GmbH , the Desmoseal^{®} prepolymers S XP 2662, XP 2458, XP 2636, XP 2749 from Covestro AG, and SPUR⁺ 1010LM, SPUR⁺ 1050MM, SPUR⁺ 1015LM, SPUR⁺ 3100HM, SPUR⁺ 3200MM from Momentive^{™} or the TEGOPAC^{®} products, such as TEGOPAC^{®} BOND 150, TEGOPAC^{®} BOND 250 and TEGOPAC^{®} SEAL 100 Evonik Hanse GmbH, the hybrid Geniosil^{®} polymers Geniosil^{®} STP-E10, Geniosil^{®} STP-E15, Geniosil^{®} STP-E30, Geniosil^{®} STP-E35, Geniosil^{®} XB502, Geniosil^{®} WP1, Geniosil^{®} WP2 from Wacker Chemie GmbH, the Kaneka MS Polymer^{™} SAT 010, MS Polymer^{™} SAT 145, MS Polymer^{™} S203H, MS Polymer^{™} S303H, MS Polymer^{™} SAX 015, MS Polymer^{™} SAX 22, MS Polymer^{™} SAX 115, MS Polymer^{™} SAX 260, MS Polymer^{™} SAX 350, MS Polymer^{™} SAX 400, MS Polymer^{™} SAX 510, MS Polymer^{™} SAX 520, MS Polymer^{™} SAX 530, MS Polymer^{™} SAX 580, MS Polymer^{™} SAX 590, MS Polymer^{™} S227, MS Polymer^{™} S327, from the Kaneka Corporation and under the trade names Excestar^{®} S2410, Excestar^{®} S2420, Excestar^{®} S3430, Excestar^{®} S3630, Excestar^{®} W2450 and Excestar^{®} MSX931 from the company Asahi Glass Co., Ltd., or mixtures of two or more thereof.

Non limitative examples of commercially available silane -modified polyacrylates or mixtures thereof with silane-modified polyethers, suitable for use in step 1 of the method used for manufacturing the composition (C) of the present invention include: MS Polymer^{™} MAX951, MAX923, MAX 602, MS Silyl^{™} MA Polymers MA850, MA451, MA 480, MA490, and XMAP^{™} Polymers SA100S, SA110S, SA310S, OR100S from the Kaneka Corporation.

It is further understood that the silane-modified polymer (P) as used in step 1 of the method used for manufacturing the composition (C) of the present invention, can be formed "in situ" in the presence of other component(s) of the composition (C) as obtained in step 2 of the method used for manufacturing the composition (C) of the present invention. For example, the composition (C) may comprise polysiloxanes as the building block (B) and may further comprise a crosslinker such as alkyl triacetoxy silanes; alkyl, alkenyl or phenyl trialkoxy silanes; oxime silanes; benzamide, lactate and/or enoxy silanes. The reaction between the building blocks (B) and the crosslinker in the composition (C) is also known as "endcapping". This reaction will "in situ" form the silane-modified polymer (P) which is then still capable of curing by cross-linking.

Preferably, when the silane-modified polymer (P) as used in step 1, is selected from a silane-modified polyether, a silane-modified polyurethane, a silane-modified polyacrylate, or mixtures of two or more thereof, the molecular weight (M_{w}) of said silane-modified polymer (P), is equal to or greater than 400 g/mol, preferably equal to or greater than 1000 g/mol, more preferably equal to or greater than 5000 g/mol, even more preferably equal to or greater than 10000 g/mol. It is further understood that the upper value of the molecular weight (M_{w}) of the silane-modified polymers (P), is not limited but advantageously equal to or less than 150000 g/mol, preferably equal to or less than 100000 g/mol, more preferably equal to or less than 60000 g/mol, even more preferably equal to or less than 40000 g/mol.

Preferably, when the silane-modified polymer (P) as used in step 1, is a silane-modified polysiloxane, the molecular weight (M_{w}) of said silane-modified polymer (P), is equal to or greater than 400 g/mol, preferably equal to or greater than 5000 g/mol, more preferably equal to or greater than 10000 g/mol. It is further understood that the upper value of the molecular weight (M_{w}) of the silane-modified polymers (P), is not limited but advantageously equal to or less than 300000 g/mol, preferably equal to or less than 100000 g/mol, more preferably equal to or less than 80000 g/mol.

The applicants prefer to use a GPC apparatus to determine molecular weights (M_{w}). Preferably, the GPC/SEC apparatus which is part of the Agilent 1200 Infinity Series LC is used, equipped with a 1200 Series isocratic pump, a standard auto sampler for volumes between 0.1 and 100 microliter, a SECcurity GPC column oven TCC6000, the 1200 Series Variable Wavelength UV detector, SECcurity 2 channel online degasser for degassing the eluent, the WinGPC Unity Software for peak integration and a GPC analytical column set consisting of the following columns in series: 2 x GPC columns PSS SDV analytical, 3 µm, 100 A, 300 x 8.0 mm followed by 2 x GPC columns PSS SDV analytical,3 µm, 1000 A, 300 x 8.0 mm. The pump is preferably set for a flow of 1.000 (one) ml/minute, with tetrahydrofuran (THF) as the eluent. The UV detector is preferably set for a 254 nm wavelength. Further preferred settings include an injection volume of 25 microliter, a column temperature of 30 °C. Preferably, the samples are prepared by dissolving them in a diluent resulting in a sample concentration of approximately 4 microgram/microliter. The preferred diluent is tetrahydrofuran (THF), 99.9%, extra pure, anhydrous, stabilized with butylhydroxytoluene (BHT) obtained from Acros, and Toluene, 99.85%, Extra Dried over Molecular Sieve also obtained from Acros. The toluene serves as an internal flow marker. The sample is preferably given at least 30 minutes to allow complete dissolution in the sample diluent. It is subsequently filtered over a 25 mm polytetrafluoroethylene (PTFE) filter with a 0.2 micrometer pore size, in order to remove any non-soluble material which may foul or block the GPC apparatus. During this sample preparation, contact with water or with atmospheric moisture should be avoided as much as possible, as it may influence the outcome of the measurement. It is known to the skilled person that the primary information obtained from the GPC RI/UV detector is not the molecular weight, but the apparent concentration at a certain elution volume. When one is interested in determining molecular weight distributions, calibration of the GPC is required, which is based on assigning the elution volume to a certain molecular weight. The most common method for this calibration, which is preferred by the applicant, is the method that uses molecular weight standards with a narrow molecular weight distribution, e.g. polystyrene standards such as the 'ReadyCal PS' series, available from the company PSS in Germany. The elution volumes of the standards are then measured and plotted against the logarithm of the molecular weight at the peak maximum of each analytical standard. A proper fit function which appropriately describes the shape of the calibration curve has also to be chosen. Using this fit function, the molecular weight distribution (relative to polystyrene) and their respective molecular weight averages, i.e., Mₙ and M_{w}, may then be calculated.

In a preferred embodiment of the method used for manufacturing the composition (C) of the present invention, the weight percent of the silane-modified polymer (P) as used in step 1, relative to the total weight of the mixture (M), is advantageously equal to or greater than 5 wt.%, preferably equal to or greater than 10 wt.%, more preferably equal to or greater than 15 wt.%, even more preferably equal to or greater than 20 wt.%, yet even more preferably equal to or greater than 25 wt.%, most preferably equal to or greater than 30 wt.%.

It is further understood that, the weight percent of the silane-modified polymer (P), relative to the total weight of the mixture (M), is advantageously equal to or less than 95 wt.%, preferably equal to or less than 90 wt.%, more preferably equal to or less than 85 wt.%, more preferably equal to or less than 75 wt.%, even more preferably equal to or less than 70 wt.%, even more preferably equal to or less than 65 wt.%, yet even more preferably equal to or less than 60 wt.%, most preferably equal to or less than 55 wt.%.

According to certain embodiments, mixture (M) as used in step 1 of the method used for manufacturing the composition (C) according to the present invention, may further comprise at least one plasticizer [plasticizer (PL), herein after].

Suitable plasticizers (PL), for use in the method used for manufacturing the composition (C) of the present invention, are notably described in US 2014/0094553 A1.

Among plasticizers (PL) suitable for use in the method used for manufacturing the composition (C) of the present invention, mention may be notably made of: phthalic acid ester compounds such as dibutyl phthalate, diisononyl phthalate (DINP), diheptyl phthalate, di(2-ethylhexyl)phthalate, diisodecyl phthalate (DIDP), and butyl benzyl phthalate; terephthalic acid ester compounds such as bis(2-ethylhexyl)-1,4-benzenedicarboxylate; non-phthalic ester compounds such as 1,2-cyclohexane dicarboxylic acid diisononyl ester, aliphatic polycarboxylic acid ester compounds such as dioctyl adipate, dioctyl sebacate, dibutyl sebacate, diisodecyl succinate, and tributyl acetylcitrate; unsaturated fatty acid ester compounds such as butyl oleate and methyl acetyl ricinoleate; alkyl sulfonic acid phenyl esters; phosphoric acid ester compounds such as tricresyl phosphate and tributyl phosphate; trimellitic acid ester compounds; chlorinated paraffin; hydrocarbon oils such as alkyl diphenyl and partially hydrogenated terphenyl; process oil; and epoxy plasticizers such as epoxidized soybean oil and benzyl epoxystearate. Also, polymer plasticizers may be used as plasticizers (PL) suitable for use in the method used for manufacturing the composition (C) of the present invention, such as but not particularly limited to, vinyl polymers obtained by polymerizing vinyl monomers by various methods; esters of polyalkylene glycols, such as diethylene glycol dibenzoate, triethylene glycol dibenzoate, and pentaerythritol ester; polyester plasticizers formed from dibasic acids (e.g. sebacic acid, adipic acid, azelaic acid, phthalic acid) and divalent alcohols (e.g. ethylene glycol, diethylene glycol, triethylene glycol, propylene glycol, dipropylene glycol); polyethers such as polyether polyols (e.g. polyethylene glycol, polypropylene glycol, and polytetramethylene glycol having a number average molecular weight of 500 or more, or even 1000 or more) and derivatives obtained by converting the hydroxyl groups of these polyether polyols into ester groups, ether groups, or the like; polystyrenes such as polystyrene and poly-α-methylstyrene; polybutadiene, polybutene, polyisobutylene, butadiene-acrylonitrile, and polychloroprene.

Non limitative examples of commercially available plasticizers (PL) suitable for use in the method used for manufacturing the composition (C) of the present invention include: Eastman 168^{™} from the Eastman Chemical Company, Jayflex^{™} DINP, Jayflex^{™} DIUP, Jayflex^{™} DIDP available from ExxonMobil Chemical, Mesamoll^{™} available from Lanxess, Hexamoll^{®} DINCH^{®} available from BASF AG, Desmophen^{®} 2060 BD available from Covestro, VORANOL^{™} available from The DOW^{®} Chemical Company and (di)benzoates such as Benzoflex^{™} 2088, Benzoflex^{™} 284 etc (Eastman) and triacetin (Eastman).

Typically, the amount of the plasticizer (PL), when present, is from 1 wt.% to 80 wt.%, more preferably from 5 wt.% to 70 wt.%, most preferably from 10 wt.% to 50 wt.%, relative to the total weight of the mixture (M).

According to certain embodiments, mixture (M) as used in step 1 of the method used for manufacturing the composition (C) according to the present invention, further comprises at least one catalyst [catalyst (CA), herein after].

Among catalysts (CA) suitable for use in the method used for manufacturing the composition (C) of the present invention, mention may be notably made of: organotin catalysts such as, but not limited to, dioctyltin compounds such as dioctyl tin diacetate, dioctyltindilaurate, dioctiltindicarboxylate, dioctyltindineodecanoate; dibutyltin compounds such as dibutyltin dilaurate, dibutyltin maleate, dibutyltin diacetate, dibutyltin dioctanoate, dibutyltin acetylacetonate, dibutyltinoxide; amine compounds and tertiary amines such as 1,8-diazabicyclo[5.4.0]undec-7-ene, 1,5-diazabicyclo[4.3.0]non-5-ene; orthotitanates or organic titanates such as, but not limited to, diisopropoxy-titaniumbis(ethylacetoacetate), dibutoxy-titanium-bist(ethylacetoacetate), titanium acetylacetonate or dibutoxy-titanium-bisacetylacetonate; or Lewis acid compounds of the transition metals zirconium, hafnium, zinc, boron, aluminum, bismuth.

Non limitative examples of commercially available catalysts (CA) suitable for use in the method used for manufacturing the composition (C) of the present invention include: Metatin^{™} 700 series as manufactured by Acima^{™}, Switzerland, the TIB KAT^{®} series such as but not limited to TIB KAT^{®} 223, 226, 218 as manufactured by TIB Chemicals AG.

Typically, the amount of the catalyst (CA), when present, is from 0.005 wt.% to 10 wt.%, more preferably from 0.05 wt.% to 2 wt.%, most preferably from 0.05 wt.% to 1 wt.%, relative to the total weight of the mixture (M).

According to certain embodiments, mixture (M) as used in step 1 of the method used for manufacturing the composition (C) according to the present invention, further comprises at least one filler [filler (FI), herein after].

Among fillers (FI) suitable for use in the method used for manufacturing the composition (C) of the present invention, mention may be notably made of: natural, grounded or precipitated calcium carbonates which are optionally coated with fatty acids, dolomites, molochites, talc, kaolin, precipitated silica, fumed silica, silicic anhydride, aqueous silicic acid and carbon black, magnesium carbonate, diatomaceous earth, calcined clay, clay, heavy spar, titanium oxide, aluminum oxide, aluminum hydroxide, flint powder, bentonite, organic bentonite, ferric oxide, zinc oxide, active zinc white, glass balloon, Shirasu balloon, organic balloon, resin powders such as PVC or PMMA powder, hollow beads, organic fibers, and inorganic fibers.

Non limitative examples of commercially available fillers (FI) suitable for use in the method used for manufacturing the composition (C) of the present invention include: the ImerSeal^{™} series from Imerys, the Hubercarb^{®} and Hymod^{®} series available from Huber Engineered Materials, the KaMin^{™} series from KaMin, the Hakuenka^{®} series from Shiraishi-Omya.

Typically, the amount of the filler (FI), when present, is from 1 wt.% to 70 wt.%, more preferably from 5 wt.% to 60 wt.%, most preferably from 10 wt.% to 60 wt.%, relative to the total weight of the mixture (M).

According to certain embodiments, mixture (M) as used in step 1 of the method used for manufacturing the composition (C) according to the present invention, further comprises one or more other common additional ingredients [ingredient (I), herein after] which may be added to enhance the appearance, storage, transport, handling and/or performance. Said ingredients (I) are known to those skilled in the art of adhesive/sealant compositions. Typical ingredients (I) may include, but are not limited to, stabilizers to protect from light, heat and/or UV-radiation; blowing agents; solvents; flame retardants; pigments; curability modifiers; radical inhibitors; metal deactivators; antiozonants; phosphorus peroxide decomposers; lubricants; adhesion promoters and crosslinkers such as epoxysilanes, diamino functional silanes, (meth)acrylsilanes, anhydrosilanes or hydroxyl functional silanes such as described notably in WO 2009/130298 A1 and WO 2014/187865 A1; moisture scavengers such as vinyltrimethoxysilane, α-functional silanes such as N-(silylmethyl)-O-methylcarbamates, for example, N-(methyldimethoxysilylmethyl) -O-methyl carbamate, (methacryloxymethyl)silanes, methoxymethylsilanes, N-phenyl-, N-cyclohexyl- and N-alkyl silanes, ortho formic acid esters, calcium oxide or molecular sieves; surface-active substances such as wetting agents, leveling agents, air release agents or defoamers; biocides such as algicides, fungicides or fungal growth inhibitors; and other substances typically used in moisture-curing compositions.

Typically, the amount of the ingredient (I), when present, is from 0.05 wt.% to 20 wt.%, more preferably from 0.1 wt.% to 10 wt.%, most preferably from 0.1 wt.% to 5 wt.%, relative to the total weight of the mixture (M).

It is understood that the order of addition of each component of the mixture (M), the at least one silane-modified polymer (P), as detailed above, the at least one heat activatable rheology modifier (R), as detailed above, optionally at least one plasticizer (PL), optionally at least one catalyst (CA), optionally at least one filler (FI), optionally one or more ingredients (I), is not particularly limited in the respective mixture (M). In general, however, the at least one silane-modified polymer (P), the at least one heat activatable rheology modifier (R), optionally at least one plasticizer (PL) and optionally at least one filler (FI), are combined under mixing first. The one or more optional ingredients (I), such as a moisture scavenger or adhesion promotors, are preferably introduced in a second mixing step and optionally under vacuum. When a catalyst (CA) is present in the mixture (M), it is preferably added in a last mixing step, optionally under vacuum. As said, the mixture (M) so formed may then be filled into a container and sealed therein, thereby forming a filled container (F).

It is important for the corresponding end-applications that the mixture (M), as detailed above, and the corresponding composition (C), as detailed below, remain substantially free of moisture in order to avoid premature crosslinking.

As used herein, the term "substantially free of moisture" means that although the mixture (M) and the corresponding composition (C) may contain some moisture, the amount of moisture is not sufficient to effect substantial curing of mixture (M) or the corresponding composition (C).

Advantageously, the container to be filled with the mixture (M), as detailed above, as used in the method used for manufacturing the composition (C) according to the present invention, is preferably a water-impermeable container, in order to isolate the mixture (M) and the corresponding composition (C) from ambient moisture. Thus, the mixture (M) and the corresponding composition (C) are preferably packed in a water-impermeable container to protect it from ambient moisture. One suitable impermeable material for the container comprising the mixture (M), as used in step 1 of the method used for manufacturing the composition (C) according to the present invention, and hence the filled container (F) as used in step 2 of the method used for manufacturing the composition (C) according to the present invention is high density polyethylene or polyethylene coated with aluminum foil. The container comprising the mixture (M) and hence the filled container (F) are suitably in the form of a drum, a bag, a cartridge or respectively in the form of a sausage suitable for use in conjunction with application equipment, preferably in the form of a cartridge.

It is further understood that all definitions and preferences as described above for mixture (M) as obtained in step 1 of the method used for manufacturing the composition (C) according to the present invention, equally apply for this embodiment and all further embodiments, as described below.

### COMPOSITION (C)

In step 2 of the method used for manufacturing the composition (C) of the present invention, a filled container (F) comprising a mixture (M) is heated to above the activation temperature T of the rheology modifier (R), thereby transforming the mixture (M) into a composition (C) inside the filled container (F), suitable for use as a sealant and/or adhesive.

As said, the activation temperature T of the rheology modifier (R) may be a temperature range which includes a minimum activation temperature and an optimum activation temperature at which the activation is the most efficient.

In one embodiment of the method used for manufacturing the composition (C) according to the present invention, the activation temperature T of the rheology modifier (R) is an activation temperature range wherein the rheology modifier (R) is having a minimum activation temperature [minimum activation temperature Tₘᵢₙ, herein after] and an optimum activation temperature [optimum activation temperature Tₒₚₜ, herein after] and in step 2 of the method used for manufacturing the composition (C) according to the present invention, the filled container (F) comprising the mixture (M) is heated to a temperature which is above the minimum activation temperature Tₘᵢₙ of the rheology modifier (R), thereby transforming the mixture (M) into a composition (C) inside the filled container (F), preferably at least 5 °C above, more preferably at least 10 °C above, even more preferably at least 15 °C above and most preferably at least 20 °C above the minimum activation temperature Tₘᵢₙ of the rheology modifier (R).

In a preferred embodiment of the method used for manufacturing the composition (C) according to the present invention, in step 2 of the method used for manufacturing the composition (C) according to the present invention, the filled container (F) comprising the mixture (M) is heated to a temperature which lies within a range of 20 °C from the optimum activation temperature Tₒₚₜ of the rheology modifier (R): Tₒₚₜ +/- 20 °C, thereby transforming the mixture (M) into a composition (C) inside the filled container (F), preferably to a temperature within Tₒₚₜ +/- 15 °C, more preferably to Tₒₚₜ +/-10 °C, even more preferably to Tₒₚₜ +/- 5 °C, and most preferably to Tₒₚₜ.

For example, if the optimum activation temperature Tₒₚₜ of the rheology modifier (R) is 85 °C, the filled container (F) is heated to a temperature in the range from 65 °C to 105 °C, preferably from 70 °C to 100 °C, more preferably from 75 °C to 95 °C, even more preferably from 80 °C to 90 °C and most preferably to 85 °C.

As detailed above, the mixture (M) as obtained in step 1, has a tack value T₀, a viscosity V₀, measured in accordance with the rheological method as detailed below and an extrudability E₀. Accordingly, the composition (C) as obtained in step 2, has a tack value T, measured in accordance with the rheological method as detailed below, a viscosity V and an extrudability E as detailed below.

The inventors have found that the ratio of the tack value T of composition (C) as obtained in step 2, to the tack value T₀ of the mixture (M) as used in step 1, is equal to or more than 3, preferably equal to or more than 4, more preferably equal to or more than 5, even more preferably equal to or more than 6, even more preferably equal to or more than 7, even more preferably equal to or more than 8, most preferably equal to or more than 9.

The ratio of the viscosity V of composition (C) as obtained in step 2, to the viscosity V₀ of the mixture (M) as used in step 1, is equal to or more than 3, preferably equal to or more than 4, more preferably equal to or more than 5, even more preferably equal to or more than 6, even more preferably equal to or more than 7, even more preferably equal to or more than 8, most preferably equal to or more than 9.

The ratio of the extrudability E₀ of the mixture (M) as used in step 1, to the extrudability E of the composition (C) as obtained in step 2, is more than 2, preferably equal to or more than 5, more preferably equal to or more than 8, even more preferably equal to or more than 10, even more preferably equal to or more than 13, even more preferably equal to or more than 15, most preferably equal to or more than 20.

The inventors have surprisingly found that the initial tack value T₀ and the viscosity V₀ of the mixture (M) can be drastically increased in step 2 of the manufacturing method, said step 2 comprising heating the filled container (F) to above the activation temperature T of the rheology modifier (R). On the other hand, the extrudability E₀ of the mixture (M) can be drastically decreased in step 2 of the manufacturing method. The tack value increase from tack value T₀ to T (i.e. the ratio $\frac{T}{{T}_{0}}$) and the viscosity increase from viscosity V₀ to V (i.e. the ratio $\frac{V}{{V}_{0}}$), only takes T₀ V₀ place in the final phase (i.e. step 2), thus the method used for manufacturing the composition (C) of the present invention provides a more practical method for manufacturing a composition (C) suitable for use as an adhesive and/or sealant with a high tack value T and a high viscosity V. The pumping and the filling of the mixture (M) into the container is not impaired and requires little energy, which then primarily improves the handling of the mixture (M) advantageously. Further, the method used for manufacturing the composition (C) according to the present invention is more economical. As said, the tack value and the viscosity increase only takes place in the final phase (step 2), thus there is no need of using specialized equipment to perform any mixing steps.

As said, the method used for manufacturing the composition (C) of the present invention is a versatile method which allows to tune the tack value T within a very broad range.

The tack value T may be measured in accordance with the rheological method, as explained above and as detailed in the experimental section.

According to certain embodiments of the method used for manufacturing the composition (C) of the present invention, the tack value T of the composition (C), measured in accordance with the rheological method as detailed below, is equal to or greater than 500 Pa, preferably equal to or greater than 1000 Pa, more preferably equal to or greater than 1500 Pa, even more preferably equal to or greater than 2000 Pa, even more preferably equal to or greater than 2500 Pa, even more preferably equal to or greater than 3000 Pa, even more preferably equal to or greater than 3500 Pa, even more preferably equal to or greater than 4000 Pa, even more preferably equal to or greater than 4500 Pa, even more preferably equal to or greater than 5000 Pa, most preferably equal to or greater than 5500 Pa. It is further understood that, the tack value T of the composition (C), measured in accordance with the rheological method as detailed below, is not particularly limited but advantageously is equal to or less than 25000 Pa, preferably equal to or less than 20000 Pa, more preferably equal to or less than 15000 Pa.

According to certain embodiments of the method used for manufacturing the composition (C) of the present invention, the tack value T of the composition (C) as obtained in step 2 is a high tack value T, measured in accordance with the rheological method as detailed below, and is equal to or greater than 1500 Pa, preferably equal to or greater than 2500 Pa, more preferably equal to or greater than 3500 Pa, more preferably equal to or greater than 4500 Pa, more preferably equal to or greater than 5000 Pa, more preferably equal to or greater than 5500 Pa, even more preferably equal to or greater than 6000 Pa, even more preferably equal to or greater than 6500 Pa, even more preferably equal to or greater than 7000 Pa, most preferably equal to or greater than 7500 Pa. It is further understood that when the tack value T is a high tack value T, measured in accordance with the rheological method as detailed below, the upper limit of the tack value T of the composition (C) as obtained in step 2, is not limited but is advantageously equal to or less than 30000 Pa, preferably equal to or less than 250000 Pa, more preferably equal to or less than 20000 Pa, even more preferably equal to or less than 15000 Pa.

According to certain embodiments of the method used for manufacturing the composition (C) of the present invention, the tack value T of the composition (C) as obtained in step 2 is a normal tack value T, measured in accordance with the rheological method as detailed below, and is equal to or greater than 500 Pa, preferably equal to or greater than 1000 Pa, more preferably equal to or greater than 1250 Pa, more preferably equal to or greater than 1500 Pa, even more preferably equal to or greater than 1750 Pa, most preferably equal to or greater than 2000 Pa. It is further understood that when the tack value T is a normal tack value T, measured in accordance with the rheological method as detailed below, the upper limit of the tack value T of the composition (C) as obtained in step 2, is not limited but is advantageously equal to or less than 10000 Pa, preferably equal to or less than 9000 Pa, more preferably equal to or less than 8500 Pa, even more preferably equal to or less than 8000 Pa, most preferably equal to or less than 7500 Pa.

Advantageously, the composition (C) as obtained in step 2, has a viscosity V, equal to or more than 30000 Pa.s, preferably equal to or more than 35000 Pa.s, more preferably equal to or more than 40000 Pa.s, even more preferably equal to or more than 45000 Pa.s, even more preferably equal to or more than 50000 Pa.s, even more preferably equal to or more than 55000 Pa.s, even more preferably equal to or more than 60000 Pa.s, even more preferably equal to or more than 65000 Pa.s, even more preferably equal to or more than 70000 Pa.s, even more preferably equal to or more than 75000 Pa.s, even more preferably equal to or more than 80000 Pa.s, even more preferably equal to or more than 85000 Pa.s, even more preferably equal to or more than 90000 Pa.s, even more preferably equal to or more than 95000 Pa.s, yet even more preferably equal to or more than 100000 Pa.s, most preferably equal to or more than 105000 Pa.s. It is further understood that, the upper limit of the viscosity V of the composition (C), is not particularly limited but advantageously equal to or less than 125000 Pa.s, preferably equal to or less than 122500 Pa.s, more preferably equal to or less than 120000 Pa.s, even more preferably equal to or less than 117500 Pa.s, most preferably equal to or less than 115000 Pa.s.

Like the tack value T, the viscosity V of the composition (C), which is the complex viscosity of the composition (C), is an important parameter for the end-use applications and may be determined using the rheological method which is described in detail in the experimental section.

The inventors have surprisingly found that despite the fact that the tack value and the viscosity increases inside the filled container (F), the method used for manufacturing the composition (C) of the present invention does not cause any unwanted changes in the other properties of the adhesive and/or sealant compositions such as adhesion and mechanical properties.

Advantageously, the composition (C) as obtained in step 2, has an extrudability at 6 bar E of equal to or less than 450 grams/minute (g/min.), preferably equal to or less than 300 g/min., more preferably equal to or less than 200 g/min., even more preferably equal to or less than 140 g/min., even more preferably equal to or less than 100 g/min..

Like the tack value T and the viscosity V, the extrudability E of the composition (C) at a pressure of 6 bar is important for the end-use applications and may be determined using the method which is described in detail in the experimental section.

In a preferred embodiment, the time between step 1 and step 2 of the method used for manufacturing the composition (C) according to the present invention is equal to or less than 24 hours, more preferably equal to or less than 12 hours, even more preferably equal to or less than 6 hours. It is further understood, that the lower value of the time between step 1 and step 2 of the method used for manufacturing the composition (C) according to the present invention is not particularly limited.

The heating of the filled container (F) to above the activation temperature T of the rheology modifier (R), thereby transforming the mixture (M) into the composition (C) inside the filled container (F), in step 2 of the method used for manufacturing the composition (C) according to the present invention, may be performed by a variety of conventional heating techniques known to those skilled in the art.

Preferably, the heating of the filled container (F) in step 2 of the method used for manufacturing the composition (C) according to the present invention, is performed by a technique selected from the group consisting of (natural) air circulation heating such as a convection oven, microwave heating, autoclave heating, ohmic heating, radio frequency heating, Infra-Red (IR) heating and steam heating such as steam tunnels, or a combination of two or more thereof. More preferably, the heating of the filled container (F) in step 2 of the method used for manufacturing the composition (C) according to the present invention, is performed by (natural) air circulation heating such as a convection oven, microwave heating, radio frequency heating, or a combination of two or more thereof. Most preferably, the heating of the filled container (F) in step 2 of the method used for manufacturing the composition (C) according to the present invention, is performed by a (natural) air circulation heating technique such as a convection oven.

In another preferred embodiment, the heating of the filled container (F) in step 2 of the method used for manufacturing the composition (C) according to the present invention, is performed by radio frequency heating.

As said, another significant advantage of the method used for manufacturing the composition (C) of the present invention lies in the fact that it is a versatile method. The method used for manufacturing the composition (C) according to the present invention allows to tune the tack value T, the viscosity V and the extrudability E within a very broad range, as said on one hand through varying the amount of the rheology modifier (R), as used in step 1, and on the other hand, through varying the heating temperature and/or time, as used during heating in step 2.

It is understood that the heating time is not particularly limited, however due to economic reasons the heating time in step 2 is advantageously equal to or less than 48 hours, preferably equal to or less than 30 hours, preferably equal to or less than 24 hours, more preferably equal to or less than 18 hours, even more preferably equal to or less than 12 hours, even more preferably equal to or less than 6 hours, even more preferably equal to or less than 5 hours, yet even more preferably equal to or less than 4 hours, most preferably equal to or less than 3 hours.

It is further understood that the lower limit of the heating time is not particularly limited and depends on one hand on the tack value T, the viscosity V and the extrudability E that one want to obtain and on the other hand on the heating technique that is used, but is advantageously equal to or more than 15 minutes, preferably equal to or more than 30 minutes, more preferably equal to or more than 45 minutes, even more preferably equal to or more than 1 hour, even more preferably equal to or more than 1.5 hours, yet even more preferably equal to or more than 2 hours, most preferably equal to or more than 2.5 hours.

In a preferred embodiment, when the heating of the filled container (F) in step 2 is performed by (natural) air circulation heating, the heating time in step 2 is comprised between 10 minutes and 48 hours, preferably between 10 minutes and 24 hours, more preferably between 30 minutes and 24 hours, even more preferably between 45 minutes and 12 hours, even more preferably between 1 hour and 6 hours, even more preferably between 1 hour and 4 hours, even more preferably between 1 hour and 3 hours, even more preferably between 1.5 hours and 3 hours, even more preferably between 2 hours and 3 hours, even more preferably between 2.5 hours and 3 hours.

Radio frequency heating in step 2 can be influenced by many parameters including: electrical power on the electrodes, distance between the electrodes, volume of material to be heated up, and frequency which directly affect heating temperature and heating time. The volume of material to be heated up depends on the number of filled containers (F) to be heated up.

When the step 2 is performed by radio frequency heating, the skilled in the art knows how to adapt the abovementioned parameters according to standard practice.

By way of examples, when radio frequency heating is used in step 2 a typical reached heating temperature is of at least 50 °C or at least 60 °C, or at least 75 °C or at most 115 °C, or at most 110 °C, or at most 105 °C.

By way of examples, a typical heating time when radio frequency heating is used in step 2 is comprised between 10 minutes and 6 hours, or between 10 minutes and 2 hours, or between 10 minutes and 1 hour, or between 20 minutes and 1 hour, or between 20 minutes and 50 minutes, or between 30 minutes and 50 minutes.

By way of examples, an electrical power when radio frequency heating is used in step 2 is comprised between 20 W and 400 W, or between 30 W and 400 W, or between 35 W and 350 W, or between 35 W and 300 W, or between 35 W and 250 W or between 35 W and 200 W, or between 40 W and 200 W, or between 45 W and 200 W or between 50 W and 200 W or between 50 W and 150 W, per filled container (F) to be heated in step 2.

When radio frequency heating is used, an power loss may occur due to the radio frequency apparatus, as a consequence an additional power may be necessary.

The inventor surprisingly found that when step 2 is carried out by radio frequency heating, the heating of step 2 is particularly homogenous and efficient. It was also found that when the heating step 2 is performed by radio frequency heating, a preheating step is optional and thus not necessary in order to obtain the desired tack value, viscosity and extrudability, moreover, further heating by means of an oven becomes unnecessary.

It is further understood that the heating temperature in step 2 is dependent on the activation temperature of the rheology modifier (R). Furthermore, the activation temperature T of the rheology modifier (R) and hence the heating temperature in step 2 of the method used for manufacturing the composition (C) according to the present invention, in particular for amide based compounds such as polyamide wax, may be dependent on the polarity of the silane-modified polymer (P) and the composition (C), and in general, the higher the polarity, the lower the activation temperature T.

In a preferred embodiment of the method used for manufacturing the composition (C) of the present invention, the heating temperature in step 2, is advantageously at least 50 °C, preferably at least 60 °C, most preferably at least 75 °C and preferably at most 115 °C, more preferably at most 110 °C, most preferably at most 105 °C.

In the present invention, prior to heating in step 2, the filled container (F) is preheated above the activation temperature T of the rheology modifier (R) (step 1a, herein after) by means of microwave heating, ohmic heating, radio frequency heating or infrared heating, preferably microwave heating or radio frequency heating, more preferably microwave heating .

The inventors have surprisingly found that the time of the heating in step 2 may be significantly reduced when a step 1a of preheating the filled container (F) above the activation temperature T of the rheology modifier (R) is introduced. The inventors have found that said step 1a allows the same tack values T, viscosities V and extrudabilities E in a shorter total time of heating.

It is understood that the preheating time is dependent on the heating technique and the power that is used, and the volume, the density, the heat capacity and the starting temperature of the mixture (M).

In one embodiment of the method used for manufacturing the composition (C) according to the present invention, the preheating time tₚ is determined according to equation 1 below: ${t}_{p} = \frac{Δ T \times V \times {C}_{p} \times ρ}{{P}_{a}}$ wherein ΔT is the temperature difference between the heating temperature and the starting temperature of the mixture (M) in Kelvin, V is the volume of the filled container (F) in Liter, Cₚ is the heat capacity of the mixture (M) in Joule/(kilograms.Kelvin), p is the density of the mixture (M) in kilograms/Liter and Pₐ is the power that is used in Watt (i.e. Joule/second).

It is understood that in practice, the preheating time tₚ may also be easily determined by a calibration procedure since it is influenced by a lot of different parameters. The filled container (F) may be preheated (for example in a microwave at a certain power or by radio frequency heating at a certain power) while the temperature of the mixture (M) and/or composition (C) inside the filled container (F) is registered. To this end a small opening may be made in the top of the filled container (F) (for example by removing the tip in case of standard adhesive/sealant cartridges as used in the example section) and a thermocouple may be inserted which is connected to a digital thermometer. The temperature may then be read out from the thermometer in function of the preheating time tₚ and in this way the preheating time tₚ required to reach the preferred heating temperature may be determined. It is further understood that when one of the influencing parameters is changed (i.e. preheating technique, power, container volume and type, compounds in the mixture (M),...), the calibration procedure has to be repeated in order to determine the correct preheating time tₚ required to reach the preferred heating temperature.

Advantageously, when the preheating step 1a is carried out by using microwave heating at a power of 800W and the heating temperature is 85 °C, the preheating time tₚ as used in step 1a is from 50 to 70 seconds, more preferably from 55 to 65 seconds.

Advantageously, when the preheating step 1a is carried out by using microwave heating at a power of 800W and the heating temperature is 100 °C, the preheating time tₚ as used in step 1a is from 70 to 90 seconds, more preferably from 75 to 85 seconds.

In another preferred embodiment, the preheating step 1a is performed by radio frequency heating.

Radio frequency heating in the preheating step 1a can be influenced by many parameters including: electrical power on the electrodes, distance between the electrodes, volume of material to be heated up, and frequency which directly affect heating temperature and heating time, The volume of material to be heated up depends on the number of filled containers (F) to be heated up.

When the preheating step 1a is performed by radio frequency heating, the skilled in the art knows how to adapt the abovementioned parameters.

By way of examples, when the preheating step 1a is performed by radio frequency heating, a typical reached heating temperature is of at least 50 °C or at least 60 °C, or at least 75 °C or at most 115 °C, or at most 110 °C, or at most 105 °C.

By way of examples, when the preheating step 1a is performed by radio frequency heating, a typical preheating time tₚ is comprised between 10 minutes and 6 hours or between 10 minutes and 2 hours or between 10 minutes and 1 hour or between 20 minutes and 1 hour or between 20 minutes and 50 minutes, or between 30 minutes and 50 minutes.

By way of examples, when the preheating step 1a is performed by radio frequency heating, a typical electrical power in step 1a is comprised between 20 W and 400 W, or between 30 W and 400 W, or between 35 W and 350 W, or between 35 W and 300 W, or between 35 W and 250 W or between 35 W and 200 W, or between 40 W and 200 W, or between 45 W and 200 W or between 50 W and 200 W or between 50 W and 150 W, per filled container (F) to be heated in the preheating step a1.

When radio frequency heating is used, a powerloss may occur due to the radio frequency apparatus, as a consequence an additional power may be necessary.

In a preferred embodiment of the method used for manufacturing the composition (C) according to the present invention, when a preheating step 1a is carried out, the heating time in step 2 is equal to or less than 8 hours, preferably equal to or less than 6 hours, more preferably equal to or less than 5 hours, even more preferably equal to or less than 4 hours, even more preferably equal to or less than 3 hours, even more preferably equal to or less than 2 hours, yet even more preferably equal to or less than 1 hour, most preferably equal to or less than 30 minutes.

It is further understood that the lower limit of the heating time, when a preheating step 1a is carried out, is not particularly limited and depends on the heating technique, the tack value T, the viscosity V and the extrudability E that one want to obtain but is advantageously equal to or more than 5 minutes, preferably equal to or more than 10 minutes, more preferably equal to or more than 15 minutes, most preferably equal to or more than 20 minutes.

In a preferred embodiment, when a preheating step 1a is carried out, the heating time in step 2 is comprised between 5 minutes and 5 hours, preferably between 10 minutes and 3 hours, more preferably between 10 minutes and 2 hours, even more preferably between 10 minutes and 1 hour, even more preferably between 15 minutes and 45 minutes, even more preferably between 20 minutes and 45 minutes.

It is further understood that all definitions and preferences as described above for composition (C) as obtained in step 2 of the method used for manufacturing the composition (C) according to the present invention, equally apply for this embodiment and all further embodiments, as described below.

A further aspect of the present invention is the use of the composition (C), as detailed above, as an adhesive and/or sealant.

When applying the composition (C) as obtained in step 2 of the method used for manufacturing the composition (C) of the present invention, as detailed above, the silane groups (SG) of the silane-modified polymer (P), come in contact with ambient moisture. The silane groups (SG) are characterized in that they hydrolyze upon contact with moisture. This leads to the formation of organosilanols and, by subsequent condensation reactions to organosiloxanes. As a result of these reactions, which may be accelerated by the use of catalysts, curing of the composition takes place. This process is also referred to as crosslinking and results in a crosslinked composition (C). The inventors have surprisingly found that not only the properties of the mixture (M) or of the compositions (C) (tack T, viscosity, melting point, solubilities, etc.) but also the properties of the crosslinked compositions (C) (hardness, elasticity, tensile strength, breaking extension, heat resistance, etc.) may be tailored on a virtually custom basis.

Correspondingly diverse, therefore, are the possibilities for use of the composition (C) as manufactured by the method used for manufacturing the composition (C) according to the present invention. For example, the compositions (C) as obtained in step 2, can be used to produce elastomers, sealants, adhesives, elastic adhesive systems, rigid and flexible foams, any of a very wide variety of coating systems, or for impression compounds. These products can be applied in any form, as for example by spreading, spraying, pouring, pressing, knifing, etc..

The inventors have found that typically, the composition (C) as obtained in step 2 of the method used for manufacturing the composition (C) according to the present invention, is suitable as an adhesive or sealant, especially for applications that require a composition with a high initial tack and a low propensity to slump.

The composition (C) as obtained in step 2 of the method used for manufacturing the composition (C) according to the present invention is, for example, used in a method of bonding two substrates or at least part of two substrates.

Thus, another aspect of the present invention is a method of bonding two substrates or at least part of two substrates by using the composition (C), wherein said method comprises the following steps:
i) applying the composition (C), according to the description above, to at least part of a substrate S1 and/or or at least part of a substrate S2;
ii) contacting at least part of substrates S1 and S2 via the applied composition (C);
iii) curing the composition (C) by means of water, for example, in the form of moisture or hydrated salt particles thereby forming a cured composition (C); wherein substrates S1 and S2 may be the same or different from each other.

Furthermore, the composition (C) as obtained in step 2 of the method used for manufacturing the composition (C) according to the present invention, may also be used in a method of sealing or coating.

Thus, another aspect of the present invention is a method of sealing or coating, by using the composition (C), wherein said method comprises the steps:
i') applying the composition (C), according to the description above, to at least part of a substrate S1 and/or between at least part of two substrates S1 and S2;
ii') curing the composition (C) by means of water, for example, in the form of moisture or hydrated salt particles thereby forming a cured composition (C); wherein substrates S1 and S2 may be the same or different from each other.

Suitable substrates S1 and/or S2 are, for example, substrates that may be selected from the group consisting of concrete, mortar, clinker, brick, ceramic, gypsum, natural stones such as granite or marble, glass, glass-ceramic, metal or metal alloys such as aluminum, steel, nonferrous metal, galvanized metal, wood, plastics such as PVC, polycarbonate, polymethyl(meth)acrylate, polyester, epoxy resin, paint and lacquer.

The articles, which are bonded, sealed or coated with the composition (C) as obtained in step 2 of the method used for manufacturing the composition (C) according to the present invention, may be for example, an industrially manufactured good or a consumer product, for example, a window or façade, solar panels, a household appliance, or a means of transportation, for example, a vehicle, or an attachment part of a vehicle, boots, caravans, and the like.

The composition (C) as obtained in step 2 of the method used for manufacturing the composition (C) according to the present invention, may be applied to the substrate using a suitable device, for example, in the form of a bead having, for example, an essentially circular or triangular cross-sectional area. Suitable methods for applying the composition (C) as described above, include for example, the application from commercial cartridges, which may be operated manually, or by means of compressed air, or from a drum or bucket using a pump or an extruder, optionally by means of an application robot. The composition (C) as described above, with good application properties, has high stability and short stringing. This means, after application it remains in the applied form, i.e. does not spread out, and, upon removal of the application device, forms no or only a very short string, so that the substrate does not become dirty.

The present invention further relates to a cured composition (C), obtainable from the composition (C), as described in the preceding.

As said, curing of the composition (C) takes place upon contact with moisture. The moisture required for the curing may originate either from the air (humidity), or the composition (C) as obtained in step 2 of the method used for manufacturing the composition (C) of the present invention, as described above, may be brought in contact with a water-containing component, for example, by coating, for example with a smoothing agent, or by spraying; or a water-containing component may be added to the composition (C) during application, for example, in the form of a water-containing paste which is mixed in, for example, via a static mixer or by incorporating moisture/hydrated salt particles. When curing is caused by humidity, the composition cures from the outside to the inside. The rate of the curing process is determined by various factors, such as the rate of diffusion of water, the temperature, the ambient humidity and the bonding geometry, and generally slows down as curing progresses.

### EXPERIMENTAL TEST RESULTS

The invention will be now described in more details with reference to the following examples, whose purpose is merely illustrative and not intended to limit the scope of the invention.
The list of used materials according to the invention can be found in Table 1 below.

**Table 1:**

| | **DESCRIPTION** |
|---|---|
| ***SILANE-MODIFIED POLYMER (P)*** | |
| MS Polymer^{®} S303H | Dimethoxysilane ms polymer; branched; medium functionality |

| ***RHEOLOGY MODIFIER (R)*** | |
|---|---|
| Crayvallac^{®} SLX | Polyamide wax |

| ***FlLLER (FI)*** | |
|---|---|
| Hakuenka^{®} CCR-S10 | Precipitated calcium carbonate |
| ImerSeal^{™} 50 | Grounded calcium carbonate |

| ***PLASTICIZER (PL)*** | |
|---|---|
| Desmophen^{®} 2060BD | Bifunctional polyether polyol |

| ***INGREDIENTS (I)*** | |
|---|---|
| ***PIGMENT*** | |
| Tronox^{®} R-FK-2 | Titaniumdioxide |

| ***STABILIZERS*** | |
|---|---|
| Tinuvin^{®} 770 | Low molecular weight hindered amine light stabilizer (hals) |
| Tinuvin^{®} 326 | Ultraviolet light absorber (uva) of the hydroxyphenyl benzotriazole class |

| ***MOISTURE SCAVENGER*** | |
|---|---|
| Dynasilan^{®} VTMO | trifunctional organosilane with reactive vinyl group |

| ***ADHESION PROMOTER*** | |
|---|---|
| Silquest A1120 | Diaminofunctional silane; n(beta-aminoethyl) gamma-aminopropyltrimethoxy-silane |

| ***CATALYST (CA)*** | |
|---|---|
| TIB KAT^{®} 223 | Dioctyltin based catalyst |

### GENERAL PROCEDURE FOR PRODUCING A MIXTURE (M) AND A COMPOSITION (C).

In step 1, a mixture (M), according to the invention, was prepared. First a silane-modified polymer (P), according to the invention, was mixed with a rheology modifier (R), according to the invention, a plasticizer (PL), a filler (FI) and ingredients (I), more specifically a pigment, a UV and light stabilizer, according to the invention, in a 10L Turello^{™} Mixer, Turello, Italy at 1200 pm for 30-45 min to obtain a homogeneous mix. An ingredient (I), more specifically a moisture scavenger, was further introduced into this mix under vacuum followed by mixing at 500-600 pm for 120 seconds. An ingredient (I), more specifically an adhesion promotor, was further introduced into this mix followed by mixing at 500-600 rpm for 120 seconds. A catalyst (CA) was further added to this mix followed by mixing at 600-800 rpm for 300 seconds, thereby forming the mixture (M). The mixture (M) so formed is filled into a standard PE cartridge Fischbach E290 with volume of 290 mL and sealed therein, thereby forming a filled container (F). The filling of the cartridges is done by placing the mixing vessel underneath a pneumatic press. A filling pipe is connected to the bottom of the mixing vessel. By applying pressure to the top of the mixing vessel, the product is squeezed out via the filling pipe into the cartridges. Next the cartridge are sealed at the back with a piston. Within approximately 24 hours, the tack value T₀, the viscosity V₀ and the extrudability E₀ of the mixture (M) as obtained in step 1, were determined according to the respective test methods, as detailed below.

In step 2, the filled container (F), according to the invention, was heated in a natural air circulation oven (Memmert UN160) to 85 °C or 100 °C, as detailed below (i.e. above the activation temperature T of the rheology modifier (R)), thereby transforming the mixture (M) into the composition (C), according to the invention, inside the filled container (F). The tack value T, the viscosity V and the extrudability E of the composition (C) as obtained in step 2, were determined according to the respective test methods, as detailed below.

### Test methods

### GENERAL PROCEDURE FOR DETERMINATION OF THE TACK VALUES T AND T₀ AND THE VISCOSITIES V AND V₀

The initial tack values T and T₀ and the viscosities V and V₀ were determined by an oscillatory rheological measurement wherein a sinusoidal stress deformation is applied and the resultant strain response is measured. A HR-2 Discovery Hybrid Rheometer of the TA Instruments company was used, operated by the TA instruments TRIOS software, with a top rotatable stainless steel plate in combination with a fixed lower Peltier plate with a diameter of 25 mm. This Peltier plate was connected to a Peltier Circulator Thermo Cube Model 10-300. The HR-2 Discovery Hybrid Rheometer was calibrated according to the manufacturer's procedure before the start of the measurements or when the top rotatable stainless steel plate was removed for cleaning. The samples (e.g. mixture (M) or e.g. composition (C) were free of any visual impurities or air bubbles and were conditioned at room temperature (23 ± 1 °C).

### Measurement parameters:

Temperature = 20 °C
Soak time = 10 seconds
Frequency ω = 1 Hz
Top rotatable stainless steel plate diameter d = 25 mm
Shear stress sweep from 10 Pa to 20000 Pa

### Working mode:

a. the temperature of the lower Peltier plate was stabilized at 20 °C
b. the gap between the two plates was closed by moving the top rotatable stainless steel plate down
c. in the software, the gap of the measuring system was set to zero
d. the top rotatable stainless steel plate was moved up and the sample (e.g. Mixture (M) or e.g. composition (C)) was applied to the lower plate using a stainless steel spatula, the amount of the sample was such that a gap of 1000 µm between the two plates was completely filled
e. the top rotatable stainless steel plate was moved down to a gap of 1010 µm, the sample was trimmed by removing the excess of sample which was squeezed out around the edges of the two plates with a stainless steel spatula.
f. the top rotatable stainless steel plate was moved further down to a gap of 1000 µm and the measuring system was locked
g. a soak time of 10 seconds was applied to allow the sample to equilibrate to the temperature of the lower Peltier plate 20 °C
h. a logarithmic shear stress sweep was performed from 10 Pa to 20000 Pa with 10 measuring points per decade
i. the tack value was read out on the stress scale when the phase angle δ reached 45°, when the sample did not exhibit any tack at all or the tack was too low to measure, a tack value of 0 Pa was assigned
j. the viscosity (complex viscosity) was calculated by taking the average of at least 3 of the first measuring points of the plateau phase of the obtained rheological profile
k. the top plate was moved up and the plates were cleaned with an appropriate solvent such as isopropanol or acetone.

### GENERAL PROCEDURE FOR DETERMINATION OF THE ACTIVATION TEMPERATURE T

To determine the activation temperatures of a rheology modifier (R), the viscosity is measured in function of the temperature to which the mixture (M) is heated. When the temperature is too low, the mixture (M) will not transform to the composition (C) and the viscosity remains around the same value. Once the (minimum) activation temperature is approached, the viscosity will start to increase because the mixture (M) will be transformed into the composition (C). In the context of the present invention, the temperature were the viscosity as determined in step e. increases with 50% relative to the viscosity of the mixture (M) as determined in step b., is the (minimum) activation temperature Tₘᵢₙ of the rheology modifier (R) (e.g. the temperature where the viscosity of the mixture obtained in step d. is increased to 1500 Pa.s when the viscosity of the mixture (M) is 1000 Pa.s).

The temperature were the viscosity as determined in step e. reaches a maximum value, is the optimum activation temperature Tₒₚₜ of the rheology modifier (R).

### Working mode:

a. Prepare the mixture (M) according to the general procedure as explained above
b. determine the (complex) viscosity of the mixture (M) according to the general procedure as explained above (step j.)
c. heat the mixture (M) to a given temperature for 120-240 min.
d. cool the mixture as obtained in step c.
e. determine the (complex) viscosity of the cooled mixture as obtained in step d. according to the general procedure as explained above (step j.)
f. repeat steps a-e for different temperatures
g. plot the (complex) viscosities as measured in step e. in function of the selected temperature in step c.

When one of the influencing parameters is changed (e.g. one of the compounds in the mixture (M)), the activation temperatures might change and the procedure has to be repeated in order to determine the correct activation temperature.

### Activation temperature of the rheology modifier (R):

### Crayvallac^{®} SLX

In the Examples below, the mixture (M) always comprises the same compounds. The activation temperature of the rheology modifier (R) that was used, Crayvallac^{®} SLX, was determined according to the general procedure as explained above.
Minimum activation temperature Tₘᵢₙ : 43.5 °C
Optimum activation temperature Tₒₚₜ : 85 °C

### GENERAL PROCEDURE FOR DETERMINATION OF THE EXTRUDABILITY E₀ AND E

The test is performed at the following test conditions:
- temperature: 23 ° C ± 2 ° C
- relative humidity: 50% ± 5%

### Working mode:

A nozzle with a 6 mm opening was applied to the top of the cartridge comprising the mixture (M) or the composition (C) (i.e. the filled container (F)). The cartridge was placed in a standard pneumatic gun (COX, Airflow 1 Pneumatic Air Dispenser Gun for 310 ml Cartridge, 2010) for cartridges of which the pressure was set to 6 bar and extruded for 10 seconds. The amount of extruded product (i.e. mixture (M) or composition (C)) was weighed in grams, from which the extrudability in grams/minute was calculated (i.e. the amount of extruded product in grams in 10 seconds multiplied by six).

### EXAMPLES

### Influence of the mixing temperature

### Example 1 (not according to the invention)

Example 1 was prepared according to the general procedure, as described above, whereby the mixture (M) was prepared in step 1 by first mixing 100.00 grams (g) of MS Polymer^{®} S303H (i.e. silane-modified polymer (P)) with 50.00 g of Desmophen^{®} 2060BD (i.e. plasticizer (PL)) and 13.75 g of Crayvallac^{®} SLX (i.e. rheology modifier (R)), 60.00 g of Hakuenka^{®} CCR-S10 and 60.00 g of ImerSeal^{™} 50 (i.e. fillers (FI)), 20.00 g of Tronox^{®} R-FK-2 (i.e. ingredient (I), pigment), 1.00 g of Tinuvin^{®} 770 and 1.00 g of Tinuvin^{®} 326 (i.e. ingredients (I), stabilizers). Vacuum was applied to the mixer and 4.00 g of Dynasilan^{®} VTMO (i.e. moisture scavenger) was further mixed in. Then 3.00 g of Silquest A1120 (i.e. ingredient (I), adhesion promoter) and finally 1.01 grams of TIB KAT^{®} 223 (i.e. catalyst (CA) were mixed in, thereby forming the mixture (M) according to the present invention. All the mixing was carried out at a mixing temperature below the activation temperature of the rheology modifier (R), in this case below 40 °C, by cooling with cooling water. The mixture (M) was filled in standard PE cartridges (Fischbach E290), thereby forming filled containers (F). The extrudability E₀, the viscosity V₀ and the tack T₀ of the mixture (M) were determined. In step 2, the filled containers (F) were heated at a heating temperature of 85 °C and for a heating time of 3 hours, thereby transforming the mixture (M) to the composition (C) inside the filled container (F). The extrudability E, the viscosity V and the tack T of the composition (C) were determined and the respective ratio's E₀/E, V/V₀ and T/T₀ were calculated. The data are summarized in Table 2 below.

### Comparative Examples 2 to 3

Comparative examples 2 to 3 were prepared according to the same procedure as example 1 except that the mixing was carried out at a mixing temperature of 55 °C and 85 °C respectively, and the data are summarized in Table 2 below. A mixing temperature of 85 °C was selected to ensure that the rheology modifier (R) was fully activated during mixing and thus before filling the mixture (M) into a container (i.e. to simulate the conventional way of working).

**Table 2:**

| | **Ex. 1** | **Comp. Ex. 2** | **Comp. Ex. 3** |
|---|---|---|---|
| **Mixing Temperature** | < 40 °C | 55 °C | 85 °C |
| **Heating temperature** | 85 °C | | |
| **Heating Time** | 3 h | | |

| | **Composition (C)** | **Comp. Composition** | |
|---|---|---|---|
| Ratio (E₀/E) | 152.7 | 10.0 | 2.3 |
| Ratio (V/V₀) | 9.4 | 1.3 | 0.4 |
| Ratio (T/T₀) | 9.1 | 0.9 | 0.3 |

The data in Table 2 clearly demonstrate the importance of the mixing temperature. In step 2, when the mixing temperature is kept below the activation temperature of the rheology modifier (R), in this case below 40 °C (Example 1), the initial viscosity V₀ and the initial tack value T₀ of the mixture (M) are both increased more than 9 times compared to the viscosity V and tack value T of the composition (C) while the extrudability decreases more than 150 times. When the mixing temperature is not kept below the activation temperature of the rheology modifier (R), (i.e. below 43.5 °C), such as for example in Comparative Examples 2 and 3, there is only a slight increase or even a decrease in viscosity and tack value in step 2.

### Influence of the heating time and the heating temperature

### Examples 4 to 6 (not according to the invention)

Examples 4 to 6 were prepared according to the same procedure as Example 1 except that the heating temperatures and heating times as used in step 2 were varied, as detailed below, and the data are summarized in Table 3 below.

**Table 3:**

| | **Ex. 1** | **Ex. 4** | **Ex. 5** | **Ex. 6** |
|---|---|---|---|---|
| **Mixture (M)** | | | | |
| **Mixing Temperature** | < 40 °C | | | |
| **Heating temperature** | 85 °C | 85 °C | 100 °C | 100 °C |
| **Heating Time** | 3h | 24 h | 3h | 24 h |

| **Composition (C)** | | | | |
|---|---|---|---|---|
| Ratio (E₀/E) | 152.7 | 1272.8 | 159.1 | 1909.2 |
| Ratio (V/V₀) | 9.4 | 10.3 | 9.0 | 9.7 |
| Ratio (T/T₀) | 9.1 | 18.8 | 13.2 | 22.7 |

The data in Table 3 clearly demonstrate the influence of the heating temperature and the heating time. In general, changing the heating temperature only has a small impact on the properties of the compositions (C) while changing the heating time has a bigger influence and especially on the tack value T. When the heating time is increased to 24 hours, the tack value T is increased to more than 18.8 and 22.7 times the initial tack value T₀ of the mixture (M) (Examples 4 and 6, respectively) compared to 9.1 and 13.2 times when the heating time was 3 hours (Examples 1 and 5), the viscosity V is increased to more than 10.3 and 9.7 times the initial tack value V₀ of the mixture (M) (Examples 4 and 6, respectively) compared to 9.4 and 9.0 times when the heating time was 3 hours (Examples 1 and 5).

### Influence of the amount of the rheology modifier (R)

### Examples 7 to 9 (not according to the invention)

Examples 7 to 9 were prepared according to the same procedure as Example 1 except that the amount of rheology modifier (R) was varied, as detailed below, and the data are summarized in Table 4 below.

**Table 4:**

| | **Ex. 1** | **Ex. 7** | **Ex. 8** | **Ex. 9** |
|---|---|---|---|---|
| **Mixture (M)** | | | | |
| **Amount of Rheology modifier (R)** (in g) | 13.75 | 11.69 | 9.63 | 7.56 |
| **Mixing Temperature** | < 40 °C | | | |
| **Heating temperature** | 85 °C | | | |
| **Heating Time** | 3 h | | | |

| **Composition (C)** | | | | |
|---|---|---|---|---|
| Ratio (E₀/E) | 152.7 | 13.2 | 15.1 | 7.2 |
| Ratio (V/V₀) | 9.4 | 5 | 4.3 | 3.7 |
| Ratio (T/T₀) | 9.1 | 7.3 | 5.0 | 3.8 |

The data in Table 4 clearly demonstrate the influence of the amount of rheology modifier (R). In general, decreasing the amount of rheology modifier (R) also decreases the viscosities and the tack values and increases the extrudability. However, the tack and viscosity increase and the extrudability decrease of the compositions (C) according to the present invention where lower amounts of rheology modifier (R) were used (Examples 7 to 9) are still similar or improved compared to compositions where the mixing temperature was not kept below the activation temperature of the rheology modifier (R) (Comparative Examples 2 and 3).

### Influence of preheating

### Example 10 (not according to the invention) and Example 11 according to the invention

Example 10 and 11 were prepared according to the general procedure, as described above, whereby the mixture (M) was prepared in step 1 by first mixing 100.00 grams (g) of MS Polymer^{®} S303H (i.e. silane-modified polymer (P)) with 50.00 g of Desmophen^{®} 2060BD (i.e. plasticizer (PL)) and 13.75 g of Crayvallac^{®} SLX (i.e. rheology modifier (R)), 60.00 g of Hakuenka^{®} CCR-S10 and 60.00 g of ImerSeal^{™} 50 (i.e. fillers (FI)), 20.00 g of Tronox^{®} R-FK-2 (i.e. ingredient (I), pigment), 1.00 g of Tinuvin^{®} 770 and 1.00 g of Tinuvin^{®} 326 (i.e. ingredients (I), stabilizers). Vacuum was applied to the mixer and 4.00 g of Dynasilan^{®} VTMO (i.e. ingredient (I), moisture scavenger) was further mixed in. Then 3.00 g of Silquest A1120 (i.e. ingredient (I), adhesion promoter) and finally 1.01 grams of TIB KAT^{®} 223 (i.e. catalyst (CA) were mixed in, thereby forming the mixture (M) according to the present invention. All the mixing was carried out at a mixing temperature below the activation temperature of the rheology modifier (R), in this case below 40 °C, by cooling with cooling water. The mixture (M) was filled in standard PE cartridges (Fischbach E290), thereby forming filled containers (F). The extrudability E₀, the viscosity V₀ and the tack T₀ of the mixture (M) were determined in accordance with the method as described in detail above. For Example 10 in step 2, the filled containers (F) were heated at a heating temperature of 85 °C and for a heating time of 0.5 hours, thereby transforming the mixture (M) to the composition (C) inside the filled container (F). For Example 11, in step 1a, the filled containers (F) were preheated to a temperature of 85 °C by means of microwave heating at 800 W with a preheating time of 60 seconds (Samsung ME82V microwave). The preheating time tₚ was determined beforehand in a calibration procedure by measuring the temperature inside a filled container (F) by making a small opening in the top of the filled container (F) and putting a thermocouple inside. The temperature was read out from the thermocouple in function of time and in this way the preheating time tₚ required to reach the preferred heating temperature of 85 °C was determined. The preheated filled containers (F) were heated in step 2, at a heating temperature of 85 °C and for a heating time of 0.5 hours, thereby further transforming the mixture (M) to the composition (C) inside the filled container (F). The extrudability E, the viscosity V and the tack T of the compositions (C) were determined and the respective ratio's E₀/E, V/V₀ and T/T₀ were calculated. The data are summarized in Table 5 below.

**Table 5:**

| | **Ex. 10** | **Ex. 11** |
|---|---|---|
| **Mixture (M)** | | |
| **Mixing Temperature** | < 40 °C | < 40 °C |
| **Heating temperature** | 85 °C | 85 °C |
| **Heating Time** | 0.5 h | 0.5 h |
| **Microwave preheating** | No | Yes |

| **Composition (C)** | | |
|---|---|---|
| Ratio (E₀/E) | 1.6 | 2.4 |
| Ratio (V/V₀) | 2.1 | 6.2 |
| Ratio (T/T₀) | 2.2 | 4.4 |

The data in Table 5 clearly demonstrate the influence of preheating the filled containers (F) to above the activation temperature T of the rheology modifier (R). When the filled containers (F) are preheated, the tack value and viscosity increase and extrudability decrease are much higher compared to contained which were not preheated. In practice this means that the total heating time may be significantly reduced since preheating the filled container (F) would allow to obtain the same tack values, viscosities and extrudabilities in a shorter total time of heating.

### Example 12 (not according to the invention) and Example 13 according to the invention

For Examples 12 and 13, the mixture (M) is prepared in step 1 according to the general procedure, as described above, whereby the mixture (M) is prepared in step 1 by first mixing 100.00 grams (g) of MS Polymer^{®} S303H (i.e. silane-modified polymer (P)) with 50.00 g of Desmophen^{®} 2060BD (i.e. plasticizer (PL)) and 13.75 g of Crayvallac^{®} SLX (i.e. rheology modifier (R)), 60.00 g of Hakuenka^{®} CCR-S10 and 60.00 g of ImerSealTM 50 (i.e. fillers (FI)), 20.00 g of Tronox^{®} R-FK-2 (i.e. ingredient (I), pigment), 1.00 g of Tinuvin^{®} 770 and 1.00 g of Tinuvin^{®} 326 (i.e. ingredients (I), stabilizers). Vacuum is applied to the mixer and 4.00 g of Dynasilan^{®} VTMO (i.e. ingredient (I), moisture scavenger) is further mixed in. Then 3.00 g of Silquest A1120 (i.e. ingredient (I), adhesion promoter) and finally 1.01 grams of TIB KAT^{®} 223 (i.e. catalyst (CA) are mixed in, thereby forming the mixture (M) according to the present invention.

All the mixing is carried out at a mixing temperature below the activation temperature of the rheology modifier (R), in this case below 40 °C, by cooling with cooling water. The mixture (M) is filled in standard PE cartridges (Fischbach E290), thereby forming filled containers (F). The extrudability E0, the viscosity V0 and the tack T0 of the mixture (M) are determined in accordance with the method as described in detail above. Thus, for Examples 12 and 13, the mixture (M) is the same.

For example 12, no preheating step is performed. The filled containers (F) are heated in step 2 until a temperature comprised between 80°C and 100°C is reached by means of radio frequency heating at a certain electrical power during a certain time (RF Systems radio frequency heating apparatus, or similar) thereby further transforming the mixture (M) to the composition (C) inside the filled container (F). The heating time until a temperature comprised between 80°C and 100°C is dependent on the electrical power loss (= power taken up by the product) inside the radio frequency heating apparatus, which can be influenced by changing for example one or more of the following parameters: electrical power on the electrodes, distance between the electrodes, volume of material to be heated up, and frequency. These parameters are set in such way that heating time until a temperature comprised between 80°C and 100°C is preferably between 10 and 60 minutes.

As the radio frequency apparatus has a semi-industrial size, it is required to heat up several cartridges or boxes filled with cartridges at once in order to be able to reach the desired temperature in the desired time.

For the Example 13, in step 1a, the filled containers (F) are preheated until a temperature comprised between 80°C and 100°C is reached by means of radio frequency heating using certain parameter settings (see above) resulting in a certain preheating time of 10-60 minutes (RF Systems radio frequency heating apparatus, or similar).

The preheated filled containers (F) are heated in step 2, at a heating temperature comprised between 80°C and 100°C in a natural air circulation oven (Memmert UN160, or similar) and for a heating times varying from 0.5 hours to 24 hours thereby further transforming the mixture (M) to the composition (C) inside the filled container (F).

The preheating time tₚ as function of certain apparatus parameters is determined beforehand in a calibration procedure by measuring the temperature inside a filled container (F) by making a small opening in the top of the filled container (F) and putting a thermocouple inside. The temperature is read out from the thermocouple in function of time and in this way the preheating time tₚ required to reach the preferred heating temperature comprised between 80°C and 100°C at certain apparatus parameters is determined.

When step 2 is carried out by radio frequency heating, the heating of step 2 is more homogeneous and more efficient.

Compared to microwave heating, radio frequency heating is better controlled as lower electrical power is used to heat up the filled containers, resulting in a more homogeneous temperature in the filled containers. In addition, when heating step 2 is performed by radio frequency heating and the parameters on the radio frequency heating apparatus are optimized, a pre-heating step is optional and thus not necessary in order to obtain the desired tack value, viscosity and extrudability. Moreover, further heating by means of an oven is unnecessary.

## Claims

1. A composition [composition (C), herein after] suitable for use as a sealant and/or adhesive prepared according to a method for manufacturing said composition (C) which comprises the steps of:
step 1: providing a container comprising a mixture (M) [filled container (F), herein after], wherein the mixture (M) is prepared by mixing at least one silane-modified polymer [silane-modified polymer (P), herein after] with at least one heat activatable rheology modifier having an activation temperature [rheology modifier (R), herein after], wherein the mixing is carried out at a mixing temperature below the activation temperature of the rheology modifier (R);
step 2: heating the filled container (F) to above the activation temperature of the rheology modifier (R), thereby transforming the mixture (M) into a composition (C) inside the filled container (F);
wherein prior to heating in step 2, the filled container (F) is preheated above the activation temperature T of the rheology modifier (R) by means of microwave heating, ohmic heating, radio frequency heating or infrared heating, preferably microwave heating or radio frequency heating, more preferably microwave heating;
wherein the mixture (M) as used in step 1 is **characterized by** a tack value T₀, the composition (C) as obtained in step 2 is **characterized by** a tack value T, and the ratio of the tack value T of composition (C) to the tack value T₀ of the mixture (M), is equal to or more than 3, the tack values T and T₀ were determined as described in the specification; wherein the mixture (M) as used in step 1 is further **characterized by** a viscosity V₀, the composition (C) as obtained in step 2 is further **characterized by** a viscosity V and the ratio of the viscosity V of composition (C) to the viscosity V₀ of the mixture (M) is equal to or more than 3, the viscosity V and V₀ were determined as described in the specification; wherein the mixture (M) as used in step 1 is further **characterized by** an extrudability E₀, the composition (C) as obtained in step 2 is further **characterized by** an extrudability E and the ratio of the extrudability E₀ of the mixture (M) to the extrudability E of the composition (C) is more than 2, E and E₀ are determined as described in the specification.

2. The composition (C) according to claim 1, wherein the rheology modifier (R) is selected from castor-oil based compounds, amide based compounds, organo-clay based compounds, fatty acid based compounds or mixtures of two or more thereof, more preferably from amide based compounds such as a polyamide wax.

3. The composition (C) according to claim 1 or 2, wherein the weight percent of the rheology modifier (R) as used in step 1, relative to the total weight of the mixture (M) as obtained in step 1, is equal to or greater than 0.1 wt.%, or equal to or greater than 0.5 wt.%, or equal to or greater than 1.0 wt.%, or equal to or greater than 1.25 wt.%, or equal to or greater than 1.5 wt.%, or equal to or greater than 1.75 wt.%, or equal to or greater than 2.0 wt.%, or equal to or greater than 2.5 wt.% and equal to or less than 70.0 wt.%.

4. The composition (C) according to any one of claims 1 to 3, wherein the at least one silane-modified polymer (P) is having at least one silane group of general formula (I) [silane group (SG), herein after]:
-(A)_{b}-(CH₂)ₘ-SiR¹ₐ(^{Y})₃₋ₐ formula (I)
wherein:
- A is each independently a divalent linker group selected from the group consisting of -O-, -S-, -(R²)N-, -O-CO-N(R²)-, - N(R²)-CO-O-, -N(R²)-CO-NH-, -NH-CO-N(R²)-, and -N(R²)-CO-N(R²)-, wherein R² is hydrogen, C₁₋₁₈ alkyl, C₂₋₁₈ alkenyl or C₁₋₆ aryl group;
- R' is a C₁₋₁₀ alkyl, C₂₋₁₀ alkenyl, C₁₋₁₀ cycloalkyl or C₆₋₁₀ aryl group;
- Y is each independently a hydroxyl or hydrolysable group;
- a is an integer ranging from 0 to 3;
- b is an integer ranging from 0 to 1;
- m is an integer ranging from 0 to 6.

5. The composition (C) according to any one of claims 1 to 4, wherein the ratio of the tack value T of composition (C) to the tack value T₀ of the mixture (M), is equal to or more than 4, more preferably equal to or more than 5, even more preferably equal to or more than 6, even more preferably equal to or more than 7, even more preferably equal to or more than 8, most preferably equal to or more than 9; the tack values T and T₀ were determined as described in the specification.

6. The composition (C) according to any one of claims 1 to 5, wherein the ratio of the viscosity V of composition (C) to the viscosity V₀ of the mixture (M) is equal to or more than 4, more preferably equal to or more than 5, even more preferably equal to or more than 6, even more preferably equal to or more than 7, even more preferably equal to or more than 8, most preferably equal to or more than 9; the viscosity V and V₀ were determined as described in the specification.

7. The composition (C) according to any one of claims 1 to 6, wherein the ratio of the extrudability E₀ of the mixture (M) to the extrudability E of the composition (C) is equal to or more than 5, more preferably equal to or more than 8, even more preferably equal to or more than 10, even more preferably equal to or more than 13, even more preferably equal to or more than 15, most preferably equal to or more than 20; as described in the specification.

8. The composition (C) according to any one of claims 1 to 7, wherein the heating of the filled container (F) in step 2 is performed by a technique selected from the group consisting of (natural) air circulation heating such as a convection oven, microwave heating, autoclave heating, ohmic heating, radio frequency heating, Infra-Red (IR) heating and steam heating such as steam tunnels, or a combination of two or more thereof, preferably by (natural) air circulation heating such as a convection oven, microwave heating, radio frequency heating, or a combination of two or more thereof, more preferably by a (natural) air circulation heating technique such as a convection oven.

9. The composition (C) according to claim 1 to 8, wherein the heating time in step 2 is equal to or less than 8 hours, preferably equal to or less than 6 hours, more preferably equal to or less than 5 hours, even more preferably equal to or less than 4 hours, even more preferably equal to or less than 3 hours, even more preferably equal to or less than 2 hours, yet even more preferably equal to or less than 1 hour, most preferably equal to or less than 30 minutes and equal to or more than 5 minutes, preferably equal to or more than 10 minutes, more preferably equal to or more than 15 minutes, most preferably equal to or more than 20 minutes.

10. An adhesive and/or sealant comprising the composition (C) according to any one of the preceding claims.

11. A cured composition (C'), obtainable from the composition (C) according to any one of claims 1 to 9.

12. A method of bonding two substrates or at least part of two substrates by using the composition (C) according to any one of claims 1 to 9, wherein said method comprises the following steps:
i) applying the composition (C) to at least part of a substrate S1 and/or at least part of a substrate S2;
ii) contacting at least part of substrates S1 and S2 via the applied composition (C);
iii) curing the composition (C) by means of water, for example, in the form of moisture or hydrated salt particles thereby forming the cured composition (C); wherein substrates S1 and S2 may be the same or different from each other.

13. A method of sealing or coating, by using the composition (C) according to any one of claims 1 to 9, wherein said method comprises the steps:
i') applying the composition (C) to at least part of a substrate S1 and/or between at least part of two substrates S1 and S2;
ii') curing the composition (C) by means of water, for example, in the form of moisture or hydrated salt particles thereby forming the cured composition (C); wherein substrates S1 and S2 may be the same or different from each other.

## Patentansprüche

1. Eine Zusammensetzung [nachstehend Zusammensetzung (C)], geeignet zur Verwendung als ein Dichtstoff und/oder Klebstoff, zubereitet nach einem Verfahren zur Herstellung der erwähnten Zusammensetzung (C), welches folgende Schritte umfasst:
Schritt 1: Bereitstellen eines Behälters, welcher eine Mischung (M) enthält, [nachstehend gefüllter Behälter (F)], wobei die Mischung (M) durch Mischen von mindestens einem silanmodifizierten Polymer [nachstehend silanmodifiziertes Polymer (P)] mit mindestens einem wärmeaktivierbaren Rheologiemodifikator mit einer Aktivierungstemperatur [nachstehend Rheologiemodifikator (R)] zubereitet ist, wobei das Mischen bei einer Mischtemperatur unter der Aktivierungstemperatur des Rheologiemodifikators (R) stattfindet;
Schritt 2: Erhitzen des gefüllten Behälters (F) auf über die Aktivierungstemperatur des Rheologiemodifikators (R), wodurch die Mischung (M) in eine Zusammensetzung (C) im gefüllten Behälter (F) umgewandelt wird;
wobei der gefüllte Behälter (F) vor dem Erhitzen in Schritt 2 mittels Mikrowellenerhitzen, ohmschem Erhitzen, Hochfrequenzerhitzen oder Infraroterhitzen, bevorzugt Mikrowellenerhitzen oder Hochfrequenzerhitzen, noch besser Mikrowellenerhitzen, über die Aktivierungstemperatur T des Rheologiemodifikators (R) vorerhitzt wird;
wobei die Mischung (M), wie verwendet in Schritt 1, **gekennzeichnet ist durch** einen Tack-Wert T₀, die Zusammensetzung (C), wie erhalten in Schritt 2, **gekennzeichnet ist durch** einen Tack-Wert T, und das Verhältnis des Tack-Wertes T von Zusammensetzung (C) zum Tack-Wert T₀ der Mischung (M) gleich wie oder höher als 3 ist, wobei die Tack-Werte T und T₀ bestimmt wurden wie beschrieben in der Spezifikation; wobei die Mischung (M), wie verwendet in Schritt 1, ferner **gekennzeichnet ist durch** eine Viskosität V₀, die Zusammensetzung (C), wie erhalten in Schritt 2, ferner **gekennzeichnet ist durch** eine Viskosität V und das Verhältnis der Viskosität V von Zusammensetzung (C) zur Viskosität V₀ der Mischung (M) gleich wie oder höher als 3 ist, wobei die Viskosität V und V₀ bestimmt wurden wie beschrieben in der Spezifikation; wobei die Mischung (M), wie verwendet in Schritt 1, ferner **gekennzeichnet ist durch** eine Extrudierbarkeit E₀, die Zusammensetzung (C), wie erhalten in Schritt 2, ferner **gekennzeichnet ist durch** eine Extrudierbakeit E und das Verhältnis der Extrudierbarkeit E₀ der Mischung (M) zur Extrudierbarkeit E der Zusammensetzung (C) höher als 2 ist, wobei E und E₀ bestimmt sind wie beschrieben in der Spezifikation.

2. Die Zusammensetzung (C) nach Anspruch 1, wobei der Rheologiemodifikator (R) ausgewählt ist aus Verbindungen auf Basis von Rizinusöl, Verbindungen auf Amidbasis, Verbindungen auf Basis von Organoton, Verbindungen auf Basis von Fettsäure oder Mischungen von zwei oder mehr davon, noch besser aus Verbindungen auf Amidbasis, wie einem Polyamidwachs.

3. Die Zusammensetzung (C) nach Anspruch 1 oder 2, wobei der Gewichtsanteil des Rheologiemodifikators (R), wie verwendet in Schritt 1, in Bezug auf das Gesamtgewicht der Mischung (M), wie erhalten in Schritt 1, gleich wie oder höher als 0,1 Gew.-%, oder gleich wie oder höher als 0,5 Gew.-%, oder gleich wie oder höher als 1,0 Gew.-%, oder gleich wie oder höher als 1,25 Gew.-%, oder gleich wie oder höher als 1,5 Gew.-%, oder gleich wie oder höher als 1,75 Gew.-%, oder gleich wie oder höher als 2,0 Gew.-%, oder gleich wie oder höher als 2,5 Gew.-% und gleich wie oder niedriger als 70,0 Gew.-% ist.

4. Die Zusammensetzung (C) nach irgendeinem der Ansprüche 1 bis 3, wobei das mindestens eine silanmodifizierte Polymer (P) mindestens eine Silangruppe der allgemeinen Formel (I) [nachstehend Silangruppe (SG)] hat:
-(A)_{b}-(CH₂)ₘ-SiR¹ₐ(^{Y})₃₋ₐ Formel (I)
wobei:
- A jeweils unabhängig eine zweiwertige Verknüpfungsgruppe ist, ausgewählt aus der Gruppe bestehend aus -O-, -S-, -(R²)N-, - O-CO-N(R²)-, -N(R²)-CO-O-, -N(R²)-CO-NH-, -NH-CO-N(R²)-, und -N(R²)-CO-N(R²)-, wobei R² Wasserstoff, C₁₋₁₈-Alkyl, C₂₋₁₈-Alkenyl oder eine C₁₋₆-Arylgruppe ist;
- R¹ ein C₁₋₁₀-Alkyl, C₂₋₁₀-Alkenyl, C₁₋₁₀-Cycloalkyl oder eine C₆₋₁₀-Arylgruppe ist;
- Y jeweils unabhängig eine Hydroxyl- oder hydrolysierbare Gruppe ist;
- a eine Ganzzahl von 0 bis 3 ist;
- b eine Ganzzahl von 0 bis 1 ist;
- m eine Ganzzahl von 0 bis 6 ist.

5. Die Zusammensetzung (C) nach irgendeinem der Ansprüche 1 bis 4, wobei das Verhältnis des Tack-Wertes T von Zusammensetzung (C) zum Tack-Wert T₀ der Mischung (M) gleich wie oder höher als 4 ist, noch besser gleich wie oder höher als 5, sogar noch besser gleich wie oder höher als 6, sogar noch besser gleich wie oder höher als 7, sogar noch besser gleich wie oder höher als 8, am besten gleich wie oder höher als 9 ist; wobei die Tack-Werte T und T₀ bestimmt wurden wie beschrieben in der Spezifikation.

6. Die Zusammensetzung (C) nach irgendeinem der Ansprüche 1 bis 5, wobei das Verhältnis der Viskosität V von Zusammensetzung (C) zur Viskosität V₀ der Mischung (M) gleich wie oder höher als 4 ist, noch besser gleich wie oder höher als 5, sogar noch besser gleich wie oder höher als 6, sogar noch besser gleich wie oder höher als 7, sogar noch besser gleich wie oder höher als 8, am besten gleich wie oder höher als 9 ist; wobei die Viskosität V und V₀ bestimmt wurden wie beschrieben in der Spezifikation.

7. Die Zusammensetzung (C) nach irgendeinem der Ansprüche 1 bis 6, wobei das Verhältnis der Extrudierbarkeit E₀ der Mischung (M) zur Extrudierbarkeit E der Zusammensetzung (C) gleich wie oder höher als 5 ist, noch besser gleich wie oder höher als 8, sogar noch besser gleich wie oder höher als 10, sogar noch besser gleich wie oder höher als 13, sogar noch besser gleich wie oder höher als 15, am besten gleich wie oder höher als 20 ist; wie beschrieben in der Spezifikation.

8. Die Zusammensetzung (C) nach irgendeinem der Ansprüche 1 bis 7, wobei das Erhitzen des gefüllten Behälters (F) in Schritt 2 durch eine Technik ausgewählt aus der Gruppe bestehend aus (natürlichem) Luftzirkulationserhitzen wie einem Konvektionsofen, Mikrowellenerhitzen, Autoklaverhitzen, ohmschem Erhitzen, Hochfrequenzerhitzen, Infrarot- (IR) -Erhitzen und Dampferhitzen wie Dampftunneln, oder einer Kombination von zwei oder mehr davon durchgeführt wird, bevorzugt durch (natürliches) Luftzirkulationserhitzen wie einen Konvektionsofen, Mikrowellenerhitzen, Hochfrequenzerhitzen, oder eine Kombination von zwei oder mehr davon, noch besser durch eine Technik (natürlichen) Luftzirkulationserhitzens wie einen Konvektionsofen.

9. Die Zusammensetzung (C) nach Anspruch 1 bis 8, wobei die Erhitzungszeit in Schritt 2 gleich wie oder weniger als 8 Stunden ist, bevorzugt gleich wie oder weniger als 6 Stunden, noch besser gleich wie oder weniger als 5 Stunden, sogar noch besser gleich wie oder weniger als 4 Stunden, sogar noch besser gleich wie oder weniger als 3 Stunden, sogar noch besser gleich wie oder weniger als 2 Stunden, aber sogar noch besser gleich wie oder weniger als 1 Stunde, am besten gleich wie oder weniger als 30 Minuten und gleich wie oder mehr als 5 Minuten, bevorzugt gleich wie oder mehr als 10 Minuten, noch besser gleich wie oder mehr als 15 Minuten, am besten gleich wie oder mehr als 20 Minuten.

10. Ein Klebstoff und/oder Dichtstoff, welcher die Zusammensetzung (C) nach irgendeinem der vorigen Ansprüche umfasst.

11. Eine ausgehärtete Zusammensetzung (C'), zu erhalten aus der Zusammensetzung (C) nach irgendeinem der Ansprüche 1 bis 9.

12. Ein Verfahren des Verbindens von zwei Substraten oder zumindest einem Teil von zwei Substraten durch Verwenden der Zusammensetzung (C) nach irgendeinem der Ansprüche 1 bis 9, wobei das erwähnte Verfahren die folgenden Schritte umfasst:
i) Aufbringen der Zusammensetzung (C) auf zumindest einen Teil eines Substrats S1 und/oder zumindest einen Teil eines Substrats S2;
ii) Inkontaktbringen von zumindest einem Teil der Substrate S1 und S2 über die aufgebrachte Zusammensetzung (C);
iii) Aushärten der Zusammensetzung (C) mittels Wasser, zum Beispiel in Form von Feuchtigkeit oder hydrierten Salzpartikeln, wodurch die ausgehärtete Zusammensetzung (C) gebildet wird;
wobei Substrate S1 und S2 gleich oder unterschiedlich voneinander sein können.

13. Ein Verfahren des Dichtens oder Beschichtens, durch Verwendung der Zusammensetzung (C) nach irgendeinem der Ansprüche 1 bis 9, wobei dieses Verfahren die folgenden Schritte umfasst:
i') Aufbringen der Zusammensetzung (C) auf zumindest einen Teil eines Substrats S1 und/oder zwischen zumindest einen Teil von zwei Substraten S1 und S2;
ii') Aushärten der Zusammensetzung (C) mittels Wasser, zum Beispiel in Form von Feuchtigkeit oder hydrierten Salzpartikeln, wodurch die ausgehärtete Zusammensetzung (C) gebildet wird;
wobei Substrate S1 und S2 gleich oder unterschiedlich voneinander sein können.

## Revendications

1. Composition [composition (C), ci-après] adaptée à une utilisation en tant que produit d'étanchéité et/ou adhésif, préparée selon un procédé de fabrication de ladite composition (C) qui comprend les étapes suivantes :
étape 1 : fournir un récipient contenant un mélange (M) [ci-après dénommé « récipient rempli (F) »], où le mélange (M) est préparé en mélangeant au moins un polymère modifié par un silane [ci-après dénommé « polymère modifié par un silane (P) »] avec au moins un modificateur de rhéologie activable à la chaleur ayant une température d'activation [ci-après dénommé « modificateur de rhéologie (R) »], où le mélange étant effectué à une température de mélange inférieure à la température d'activation du modificateur de rhéologie (R) ;
étape 2 : le chauffage du récipient rempli (F) à une température supérieure à la température d'activation du modificateur de rhéologie (R), transformant ainsi le mélange (M) en une composition (C) à l'intérieur du récipient rempli (F) ;
où, avant le chauffage de l'étape 2, le récipient rempli (F) est préchauffé au-dessus de la température d'activation T du modificateur de rhéologie (R) au moyen d'un chauffage par micro-ondes, d'un chauffage ohmique, d'un chauffage par radiofréquence ou d'un chauffage infrarouge, de préférence par micro-ondes ou par radiofréquence, et plus préférentiellement par micro-ondes ;
où le mélange (M) tel qu'utilisé à l'étape 1 est **caractérisé par** une valeur d'adhésivité T₀, la composition (C) telle qu'obtenue à l'étape 2 est **caractérisée par** une valeur d'adhésivité T, et le rapport entre la valeur d'adhésivité T de la composition (C) et la valeur d'adhésivité T₀ du mélange (M) est égal ou supérieur à 3 ; les valeurs d'adhésivité T et T₀ ont été déterminées, comme décrit dans le fascicule, où le mélange (M) tel qu'utilisé à l'étape 1 étant en outre **caractérisé par** une viscosité V₀, la composition (C) telle qu'obtenue à l'étape 2 étant en outre **caractérisée par** une viscosité V, et le rapport entre la viscosité V de la composition (C) et de la viscosité V₀ du mélange (M) est égal ou supérieur à 3 ; la viscosité V et V₀ ont été déterminées, comme décrit dans le fascicule, où le mélange (M) tel qu'utilisé à l'étape 1 est en outre **caractérisé par** une extrudabilité E₀ ; la composition (C) telle qu'obtenue à l'étape 2 est en outre **caractérisée par** une extrudabilité E, et le rapport entre l'extrudabilité E₀ du mélange (M) et l'extrudabilité E de la composition (C) est supérieur à 2, E et E₀ sont déterminés comme décrit dans le fascicule.

2. Composition (C) selon la revendication 1, dans laquelle le modificateur de rhéologie (R) est choisi parmi les composés à base d'huile de ricin, les composés à base d'amide, les composés à base d'argile organique, les composés à base d'acides gras ou des mélanges de deux ou plusieurs de ceux-ci, de préférence parmi les composés à base d'amide tels qu'une cire de polyamide.

3. Composition (C) selon la revendication 1 ou 2, dans laquelle le pourcentage en poids du modificateur de rhéologie (R) tel qu'utilisé à l'étape 1, par rapport au poids total du mélange (M) tel qu'obtenu à l'étape 1, est égal ou supérieur à 0,1 % en poids, ou égal ou supérieur à 0,5 % en poids, ou est égal ou supérieur à 1,0 % en poids, ou égal ou supérieur à 1,25 % en poids, ou égal ou supérieur à 1,5 % en poids, ou égal ou supérieur à 1,75 % en poids, ou égal ou supérieur à 2,0 % en poids, ou égal ou supérieur à 2,5 % en poids et égal ou inférieur à 70,0 % en poids.

4. Composition (C) selon l'une quelconque des revendications 1 à 3, dans laquelle le au moins un polymère modifié par un silane (P) comporte au moins un groupe silane de formule générale (I) [groupe silane (SG), ci-après] :
-(A)_{b}-(CH₂)ₘ-SiR¹ₐ(^{Y})₃₋ₐ formule (I)
dans laquelle :
- A représente, indépendamment les uns des autres, un groupe de liaison divalent choisi parmi le groupe constitué de -O-, -S-, - (R²)N-, -O-CO-N(R²)-, -N(R²)-CO-O-, -N(R²)-CO-NH-, -NH-CO-N(R²)- et -N(R²)-CO-N(R²)-, dans laquelle R² représente un atome d'hydrogène, un groupe alkyle en C₁₋₁₈, alcényle en C₂₋₁₈ ou aryle en C₁₋₆;
- R¹ est un groupe alkyle en C₁₋₁₀, alcényle en C₂₋₁₀, cycloalkyle en C₁₋₁₀ ou aryle en C₆₋₁₀;
- Y représente, indépendamment les uns des autres, un groupe hydroxyle ou un groupe hydrolysable ;
- a est un nombre entier compris entre 0 et 3 ;
- b est un nombre entier compris entre 0 et 1 ;
- m est un nombre entier compris entre 0 et 6.

5. Composition (C) selon l'une quelconque des revendications 1 à 4, dans laquelle le rapport entre la valeur d'adhésivité T de la composition (C) et la valeur d'adhésivité T₀ du mélange (M) est égal ou supérieur à 4, de préférence égal ou supérieur à 5, plus préférablement égal ou supérieur à 6, encore plus préférablement égal ou supérieur à 7, encore plus préférablement égal ou supérieur à 8, et de manière encore plus préférable égal ou supérieur à 9 ; les valeurs d'adhésivité T et T₀ ont été déterminées comme décrit dans le fascicule.

6. Composition (C) selon l'une quelconque des revendications 1 à 5, dans laquelle le rapport entre la viscosité V de la composition (C) et la viscosité V₀ du mélange (M) est égal ou supérieur à 4, de préférence égal ou supérieur à 5, plus préférablement égal ou supérieur à 6, encore plus préférablement égal ou supérieur à 7, encore plus préférablement égal ou supérieur à 8, et de manière encore plus préférable égal ou supérieur à 9 ; les viscosités V et V₀ ont été déterminées comme décrit dans le fascicule.

7. Composition (C) selon l'une quelconque des revendications 1 à 6, dans laquelle le rapport entre l'extrudabilité E₀ du mélange (M) et l'extrudabilité E de la composition (C) est égal ou supérieur à 5, de préférence égal ou supérieur à 8, plus préférablement égal ou supérieur à 10, encore plus préférablement égal ou supérieur à 13, encore plus préférablement égal ou supérieur à 15, et de manière encore plus préférable égal ou supérieur à 20 ; comme décrit dans le fascicule.

8. Composition (C) selon l'une quelconque des revendications 1 à 7, dans laquelle le chauffage du récipient rempli (F) à l'étape 2 est réalisé par une technique choisie parmi le groupe constitué du chauffage par circulation d'air (naturel) tel qu'un four à convection, du chauffage par micro-ondes, du chauffage en autoclave, du chauffage ohmique, du chauffage par radiofréquence, le chauffage par infrarouge (IR) et le chauffage à la vapeur, tel que les tunnels à vapeur, ou une combinaison de deux ou plusieurs de celles-ci, de préférence par un chauffage par circulation d'air (naturel), tel qu'un four à convection, le chauffage par micro-ondes, le chauffage par radiofréquence, ou une combinaison de deux ou plusieurs de celles-ci, plus préférentiellement par une technique de chauffage par circulation d'air (naturel), telle qu'un four à convection.

9. Composition (C) selon les revendications 1 à 8, dans laquelle la durée de chauffage à l'étape 2 est égale ou inférieure à 8 heures, de préférence égale ou inférieure à 6 heures, plus préférablement égale ou inférieure à 5 heures, encore plus préférablement égale ou inférieure à 4 heures, encore plus préférablement égale ou inférieure à 3 heures, encore plus préférablement égale ou inférieure à 2 heures, mais de préférence encore, égal ou inférieur à 1 heure, de préférence encore, égal ou inférieur à 30 minutes et égal ou supérieur à 5 minutes, de préférence égal ou supérieur à 10 minutes, de préférence encore égal ou supérieur à 15 minutes, de préférence encore égal ou supérieur à 20 minutes.

10. Adhésif et/ou produit d'étanchéité comprenant la composition (C) selon l'une quelconque des revendications précédentes.

11. Composition durcie (C), obtenable à partir de la composition (C) selon l'une quelconque des revendications 1 à 9.

12. Procédé d'assemblage de deux substrats ou d'au moins une partie de deux substrats à l'aide de la composition (C) selon l'une quelconque des revendications 1 à 9, **caractérisé en ce que** ledit procédé comprend les étapes suivantes :
i) appliquer la composition (C) sur au moins une partie d'un substrat S1 et/ou sur au moins une partie d'un substrat S2 ;
ii) mettre en contact au moins une partie des substrats S1 et S2 par l'intermédiaire de la composition (C) appliquée ;
iii) durcir la composition (C) au moyen d'eau, par exemple sous forme d'humidité ou de particules de sel hydraté, formant ainsi la composition durcie (C) ;
dans lequel les substrats S1 et S2 peuvent être identiques ou différents l'un de l'autre.

13. Procédé d'étanchéification ou de revêtement, utilisant la composition (C) selon l'une quelconque des revendications 1 à 9, dans lequel ledit procédé comprend les étapes suivantes :
i') appliquer la composition (C) sur au moins une partie d'un substrat S1 et/ou entre au moins une partie de deux substrats S1 et S2 ;
ii') durcir la composition (C) au moyen d'eau, par exemple sous forme d'humidité ou de particules de sel hydratées, formant ainsi la composition durcie (C) ;
dans lequel les substrats S1 et S2 peuvent être identiques ou différents l'un de l'autre.
